# EUROPEAN PATENT APPLICATION

(11) **EP 4 506 060 A1**
(43) Date of publication of application: **12.02.2025**
(21) Application number: 22937191.9
(22) Date of filing: 20.10.2022
(51) Int. Cl.: B01J 29/14, B01J 29/12, B01J 29/76, B01J 29/74, B01J 35/10, C10G 45/12, C10G 45/06

(54) **OIL MODIFICATION CATALYST AND PREPARATION METHOD THEREFOR, OIL MODIFICATION METHOD, AND OIL ADSORPTIVE DESULFURIZATION MODIFICATION SYSTEM**

(30) Priority: 12.04.2022 CN 202210381714; 12.04.2022 CN 202210398051
(71) Applicant: PetroChina Company Limited, Dongcheng District Beijing 100007 (CN)
(72) Inventor: LIU, Fei, Lanzhou City, Gansu 730060 (CN); MA, An, Beijing 100083 (CN); LI, Changming, Lanzhou City, Gansu 730060 (CN); LU, Qiong, Lanzhou City, Gansu 730060 (CN); WANG, Mei, Lanzhou City, Gansu 730060 (CN); MA, Yinghai, Lanzhou City, Gansu 730060 (CN); ZHAI, Lihui, Lanzhou City, Gansu 730060 (CN); CHEN, Hong, Lanzhou City, Gansu 730060 (CN); JING, Yuanyuan, Lanzhou City, Gansu 730060 (CN); ZHANG, Zhenli, Beijing 102206 (CN)
(74) Representative: Petraz, Gilberto Luigi
(86) International application number: PCT/CN2022/126499
(87) International publication number: WO 2023/197558

(57) **Abstract**

The present invention relates to the technical field of petrochemical, and disclosed are an oil modification catalyst and a preparation method therefor, an oil modification method, and an oil adsorptive desulfurization modification system. On the basis of the total amount of the catalyst, the catalyst comprises 65-85wt% of carrier, 8-15wt% of primary active ingredient, 2-5wt% of secondary active ingredient, and 5-15wt% of binder; on the basis of the total amount of the carrier, the carrier comprises 65-85wt% of zinc oxide, 8-22wt% of alumina, 0-5wt% of titanium oxide or zirconia, and 4-10wt% of modified molecular sieve; the content of titanium oxide and the content of zirconium oxide are not zero at the same time; the modified molecular sieve comprises a molecular sieve and a modification element; the molecular sieve is selected from a USY and/or Beta molecular sieve; and the modification element is selected from lanthanum and/or palladium. The catalyst provided by the present invention integrates efficient desulfurization, efficient demetallization, and efficient viscosity reduction, and is particularly suitable for treating medium and heavy oil.

## Description

### CROSS-REFERENCE TO RELATED APPLICATIONS

The present application claims the benefit of the China patent application No. "202210381714.6", filed on April 12, 2022, entitled "OIL PRODUCT MODIFICATION CATALYST, PREPARATION METHOD THEREOF AND OIL PRODUCT MODIFICATION METHOD", and the China patent application No. "202210398051.9", filed on April 12, 2022, entitled "OIL ADSORPTIVE DESULFURIZATION MODIFICATION METHOD AND SYSTEM", the contents of which are specifically and entirely incorporated herein by reference.

### TECHNICAL FIELD

The present disclosure relates to the technical field of petrochemicals, in particular to an oil modification catalyst and a preparation method therefor, an oil modification method, and an oil adsorptive desulfurization modification system.

### BACKGROUND ART

The sulfur element contained in the oil may generate many hazards to petroleum processing and the product application thereof, such as corrosion of the metal equipment, poisoning of the catalyst, degrading of the product quality, and aggravation of environmental pollution. Therefore, the search for an efficient and economical desulfurization method has been the goal of some oil refining researchers in recent years.

The oil desulfurization may be classified into three major categories, namely light oil desulfurization, medium oil desulfurization, and heavy oil desulfurization. At present, the adsorptive desulfurization technology of light oil has increasingly matured and is widely applied. However, there is no effective adsorptive desulfurization treatment technology for medium oil (especially high sulfur medium oil with a sulfur content higher than 0.3 wt%) and heavy oil.

The reasons may be that compared with the light oil, the difficulties in the desulfurization process of the medium oil and the heavy oil reside in that on one hand, the medium oil and the heavy oil have a large viscosity, which is not beneficial to diffusion; on the other hand, the macromolecular sulfides in the medium oil and the heavy oil have complex structures, high thermal stability, and high total sulfur content, thus the effect of deep removal can hardly be achieved.

CN102895940A discloses a hydrocarbon oil desulfurization adsorbent, the adsorbent at least comprises the following components: 1) 1-20wt% of an aluminosilicate molecular sieve with a duodenary-ring pore-channel structure; 2) 3-35wt% of titanium dioxide; 3) 5-40wt% of a silicon oxide source; 4) 10-80wt% of zinc oxide; 5) 5-30wt% of at least one metal accelerating agent selected from cobalt, nickel, iron, and manganese. The adsorbent adopts a non-aluminum adhesive, such that zinc oxide is prevented from being partially converted into zinc aluminate, thus the activity and stability of the adsorbent are greatly improved, and the absorbent has an obvious advantage of substantially increasing gasoline octane number. However, although the catalyst has a desirable desulfurization effect of gasoline fraction, it cannot be applied in the desulfurization of heavy oil.

CN1473910A discloses a diesel oil adsorption desulfurizing method, the method comprises contacting the diesel oil with a kind of amorphous alloy adsorbent with nickel as the main active component inside a fluidized bed or slurry bed reactor under the conditions of a temperature from room temperature to 150°C and a pressure from atmospheric pressure to 2.0MPa. The method has a desulfurizing rate of up to 60 wt%. The technology mainly aims at the small amount of benzothiophene and/or dibenzothiophene and derivatives thereof which can hardly be removed from diesel oil, and the sulfur content is between 20ppm and 500ppm by weight of elemental sulfur.

CN101822971B discloses a mesoporous molecular sieve adsorbent, a preparation method and application thereof in gasoline desulfurization, wherein the molecular sieve adsorbent is prepared by grinding and roasting the mesoporous molecular sieve SBA-15 raw powder and copper salt and performing an auto-reduction in an inert atmosphere. The molecular sieve adsorbent can perform the adsorptive desulfurization to gasoline in a fixed bed reactor, it has a large adsorption capacity and a high desulfurization efficiency to thiophene-type sulfide, and can still maintain desirable desulfurization effect after the adsorbent reactivation. However, the molecular sieve adsorbent is not suitable for treating heavy oil having a large viscosity.

At present, the desulfurization of the medium and heavy oil is generally implemented by means of a hydrogenation process. The modification of heavy oil with a modification process usually requires the heavy oil to be subjected to processes such as hydrodesulfurization, hydrodenitrogenation, and hydrodecarbonization, the demetallization treatment is further required for the metal-containing oil products. To achieve the deep cracking, viscosity reduction, and modification of the heavy oil, the reaction temperature is generally 450°C or higher. Therefore, the desulfurization process of medium and heavy oil confronts the problems such as a complex reaction process, high hydrogen consumption, high costs, harsh conditions, and the need of grading use of various hydrogenation catalysts with different functions, it has a techno-economic disadvantage.

Therefore, it is urgent to provide a modification catalyst that can effectively implement desulfurization, demetallization, and viscosity reduction of sulfur-containing oils, especially sulfur-containing medium oil and sulfur-containing heavy oil at low temperatures. Besides the defects of the catalyst, the operation flow of the hydrogenation process of medium and heavy oil needs to be further improved. CN105694949A discloses a gasoline adsorptive desulfurization method, the method comprises carrying out adsorption desulphurization on catalytically hydrogenated gasoline in a fixed bed reactor through a gasoline adsorption desulfurizer, it can improve the desulfurization rate of gasoline adsorptive desulfurization while reducing octane number, the desulfurization rate may be 80% or more, but the desulfurization effect still needs to be further improved.

CN104560138A discloses a fluidized bed heavy oil hydrotreating method, which adopts the combination of two mixed hydrogenation catalysts having a bimodal pore structure, such that the heavy oil raw materials and hydrogen gas can carry out the reaction in a boiling-bed reactor under the heavy oil hydrotreating conditions, so as to realize hydrodesulfurization, hydrodemetallization, carbon residue conversion, and asphaltene conversion. However, the method has defects of high reaction pressure, large hydrogen-oil ratio, high hydrogen consumption, and high running cost.

CN1473910A discloses a diesel oil adsorption desulfurizing method, the method comprises contacting the diesel oil with a kind of amorphous alloy adsorbent with nickel as the main active component inside a fluidized bed or slurry bed reactor under the conditions of a temperature from room temperature to 150°C and a pressure from atmospheric pressure to 2.0MPa. The method has a desulfurizing rate of up to 60 wt%.. The method is effective for desulfurization of diesel oil, but is unsuitable for treating heavy oil having a high viscosity.

### SUMMARY

On one hand, the present disclosure aims to solve the problems in the prior art that the desulfurization catalyst has a single function and poor desulfurization effect on the heavy oil and medium oil, and provides an oil modification catalyst, a preparation method thereof, and an oil modification method. The oil modification catalyst can facilitate the efficient desulfurization and demetallization of oil products at the reaction temperature range of 300-450°C, can also obviously reduce the viscosity of the products obtained after the oil modification, improves the API degree of the products, and is suitable for industrial popularization. On the other hand, the present disclosure aims to overcome the problems in the prior art concerning the large reaction pressure, large hydrogen/oil ratio, high energy consumption, and hydrogen consumption of the hydrodesulfurization process and provides an oil adsorptive desulfurization modification method and an oil adsorptive desulfurization modification system.

To achieve the above objects, the first aspect of the present disclosure provides an oil modification catalyst comprising 65-85wt% of a carrier, 8-15wt% of a primary active ingredient, 2-5wt% of a secondary active ingredient, and 5-15wt% of a binder, based on the total amount of the catalyst;
wherein the carrier comprises 65-85wt% of zinc oxide, 8-22wt% of alumina, 0-5wt% of titanium oxide, 0-5wt% of zirconia, and 4-10wt% of modified molecular sieve, based on the total amount of the carrier; wherein the content of titanium oxide and the content of zirconia are not zero at the same time; the modified molecular sieve comprises a molecular sieve and a modification element; the molecular sieve is selected from a USY molecular sieve and/or Beta molecular sieve; and the modification element is selected from lanthanum and/or palladium;
wherein the primary active ingredient is selected from oxides of nickel and/or copper, the secondary active ingredient is one or more selected from oxides of potassium, cobalt, molybdenum, and iron; and the binder is selected from alumina and/or silicon oxide.

The second aspect of the present disclosure provides a method for prepararing the oil modification catalyst, comprising the following steps:
(1) loading a modification element on a molecular sieve to obtain a modified molecular sieve powder; wherein the modification element is selected from lanthanum and/or palladium, and the molecular sieve is selected from a USY molecular sieve and/or Beta molecular sieve;
(2) subjecting a carrier precursor and a pore former to a resonant mixing to obtain a mixture I; wherein the carrier precursor comprises a zinc oxide powder, pseudo-boehmite, an optional titanium oxide powder, an optional zirconia powder, and the modified molecular sieve powder; wherein at least one of the titanium oxide powder and the zirconia powder is contained;
(3) adding a primary active ingredient precursor to the mixture I to obtain mixture II; wherein the primary active ingredient precursor is a soluble compound containing nickel and/or copper;
(4) blending the binder precursor and the mixture II and then performing a granulation molding and a first roasting to obtain solid particles;
(5) impregnating a secondary active ingredient precursor on the solid particles and performing a second roasting to prepare the oil modification catalyst; wherein the secondary active ingredient is one or more selected from the soluble compounds of potassium, cobalt, molybdenum, and iron.

The third aspect of the present disclosure provides a first oil modification method comprising reducing the catalyst according to the first aspect and subsequently contacting the catalyst with an oil product and hydrogen gas to carry out a modification reaction to obtain a modified oil product.

The fourth aspect of the present disclosure provides a second oil modification method comprising the following steps:
(1) reducing a material containing a fresh catalyst in the presence of hydrogen gas to obtain an active catalyst;
(2) contacting an oil product and reactive hydrogen gas with the active catalyst in a moving bed reactor to carry out an adsorptive desulfurization modification reaction to obtain a modification outcome and a post-reaction catalyst;
(3) separating the modification outcome to obtain a modified product;
(4) subjecting the post-reaction catalyst to a first-stage regeneration to obtain a first-stage regenerant;
(5) subjecting the first-stage regenerant to a second-stage regeneration to obtain a regenerated catalyst;
(6) returning the regenerated catalyst to the materials in step (1) for recycling.

The fifth aspect of the present disclosure provides an oil adsorptive desulfurization modification system comprising a restorer (1), a moving bed reactor (2), a separation tower (3), a first-stage regenerator (4), and a second-stage regenerator (5);
wherein the restorer (1) is connected end-to-end with the moving bed reactor (2), the first-stage regenerator (4), and the second-stage regenerator (5); the separation tower (3) is connected with the moving bed reactor (2).

Due to the technical scheme, the present disclosure produces the favorable technical effects as follows:
1) The oil product modification catalyst provided by the present disclosure has a strength distributed between 43N and 48N by randomly measuring the strength of 50 catalyst particles, the strength of the catalyst particles is uniform and can meet the requirements of moving bed and/or fluidized bed processes, and can be easily applied in the industrial production;
2) The oil product modification catalyst provided by the present disclosure can integrate efficient desulfurization, efficient demetallization, and efficient viscosity reduction at the reaction temperature of 300-450°C, and the catalyst can crack macromolecular compounds (including sulfide molecules) in the oil product into micromolecular compounds at low temperature, thereby promoting the ring opening and the breakage of metalloporphyrin compounds and the decomposition of oil-soluble metallo-organic compounds, generating a plurality of micromolecular compounds, thus the density and the viscosity of the product can be obviously reduced, and the API degree of the product is improved;
3) The oil product modification method provided by the present disclosure can be stably operated in a fixed bed, and can prolong the operation period;
4) The oil adsorptive desulfurization modification method provided by the present disclosure can be used for carrying out adsorptive desulfurization modification treatment on an oil product in a moving bed reactor, and can realize continuous production;
5) The oil adsorptive desulfurization modification method provided by the present disclosure can be used for carrying out two-stage regeneration treatment on the inactivated catalyst so that the activity of the regenerated catalyst can be improved, the investment cost and the production and operation costs of the device can be greatly reduced;
6) In the oil adsorptive desulfurization modification method provided by the present disclosure, the post-reaction catalyst is preferably cleaned by using the oil washing liquid, so that on one hand, oil products adhered to the surface of the inactivated catalyst and adsorbed in the pore channels can be removed, the emission of carbon dioxide in the regeneration process is reduced, on the other hand, the maximum recovery of modified product can be realized;
7) In the oil adsorptive desulfurization modification method provided by the present disclosure, a part of the first-stage regenerant is preferably subjected to reactivation treatment, so that metal ions attached to the surface of the catalyst and adsorbed in the pore channels can be further removed, the activity of the regenerated catalyst is improved;
8) The oil adsorptive desulfurization modification method provided by the present disclosure separates the recycled hydrogen gas from the modified product and returns the recycled hydrogen gas to the adsorptive desulfurization modification reaction, so that the utilization rate of the hydrogen can be improved, and the hydrogen consumption can be reduced;
9) According to the oil adsorptive desulfurization modification method provided by the present disclosure, the viscosity reduction and desulfurization effects can be obviously improved by selecting a specific catalyst, and the metal content in a modified product is reduced;
10) The oil adsorptive desulfurization modification method and system provided by the present disclosure have the advantages of low reaction pressure, small hydrogen/oil ratio, low hydrogen consumption, low operational difficulty, high modified product yield, and low coke yield, and are suitable for industrial popularization.

### BRIEF DESCRIPTION OF THE DRAWINGS

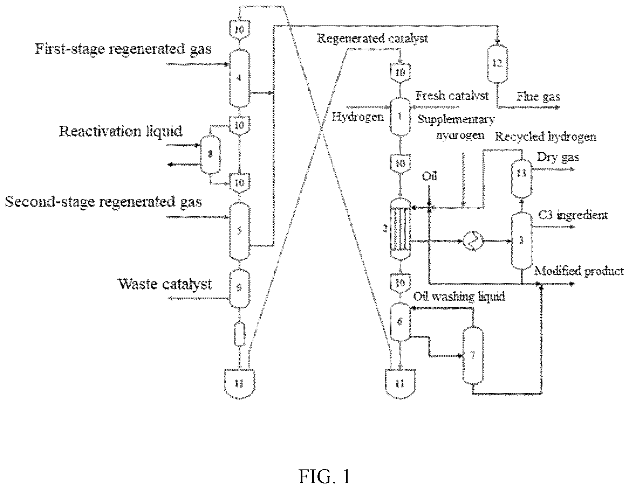

FIG. 1 illustrates a schematic structural diagram of an oil adsorptive desulfurization modification system in a preferred embodiment of the present disclosure.

### EXPLANATION OF REFERENCE SIGNS

1. Restorer
2. Moving bed reactor
3. Separation tower
4. First-stage regenerator
5. Second-stage regenerator
6. Oil washer
7. Fractionating tower
8. Rejuvenator
9. Separator
10. Locking hopper
11. Lifter
12. Flue gas desulfurization system
13. Hydrogen separation unit

### DESCRIPTION OF THE PREFERRED EMBODIMENT

The terminals and any value of the ranges disclosed herein are not limited to the precise ranges or values, such ranges or values shall be comprehended as comprising the values adjacent to the ranges or values. As for numerical ranges, the endpoint values of the various ranges, the endpoint values and the individual point values of the various ranges, and the individual point values may be combined with one another to produce one or more new numerical ranges, which should be deemed to have been specifically disclosed herein.

The first aspect of the present disclosure provides an oil modification catalyst comprising 65-85wt% of a carrier, 8-15wt% of a primary active ingredient, 2-5wt% of a secondary active ingredient, and 5-15wt% of a binder, based on the total amount of the catalyst;
wherein the carrier comprises 65-85wt% of zinc oxide, 8-22wt% of alumina, 0-5wt% of titanium oxide, 0-5wt% of zirconia, and 4-10wt% of modified molecular sieve, based on the total amount of the carrier; wherein the content of titanium oxide and the content of zirconia are not zero at the same time; the modified molecular sieve comprises a molecular sieve and a modification element; the molecular sieve is selected from a USY molecular sieve and/or Beta molecular sieve; and the modification element is selected from lanthanum and/or palladium;
wherein the primary active ingredient is selected from oxides of nickel and/or copper, the secondary active ingredient is one or more selected from oxides of potassium, cobalt, molybdenum, and iron; and the binder is selected from alumina and/or silicon oxide.

In the present disclosure, the content of each component in the catalyst can be calculated according to the feeding amount of raw materials in the preparation process of the catalyst. It shall be noted that there are metal oxides corresponding to the iron element, the content of iron element is calculated in terms of ferric oxide in the present disclosure.

The inventors of the present disclosure have discovered through research that the modified catalyst with high zinc oxide content and excellent mechanical strength can be prepared by using the USY molecular sieve and/or Beta molecular sieve modified with Lanthanum and/or Palladium and bonding the components through a binder containing aluminum or silicon. The modification catalyst can obviously lower the temperature of the modification reaction, realize the efficient desulfurization, demetallization, and viscosity reduction of the medium and heavy oil under the reaction condition of 300-450°C, and obtain the modified product with a high API degree.

In a preferred embodiment, the catalyst comprises 70-80wt% of a carrier, 10-13wt% of a primary active ingredient, 3-4wt% of a secondary active ingredient, and 7-13wt% of a binder, based on the total amount of the catalyst.

In a preferred embodiment, the carrier comprises 70-80wt% of zinc oxide, 12-18wt% of alumina, 3-5wt% of titanium oxide or zirconia, and 5-7wt% of modified molecular sieve, based on the total amount of the carrier.

In a preferred embodiment, the molecular sieve is a USY molecular sieve or Beta molecular sieve. The present inventors find in research that the modified USY molecular sieve or modified Beta molecular sieve can improve the cracking activity of the catalyst at low temperatures, can moderately crack macromolecular compounds in the medium and heavy oil, promote the cracking and ring opening of metalloporphyrin compounds to generate micromolecular compounds and perform the functions of improving the desulfurization activity and demetallization activity and reducing the viscosity of the catalyst.

In a preferred embodiment, the content of said modification element calculated in terms of oxide is within the range of 0. 1-5wt%, more preferably within the range of 1-3wt%, based on the total amount of the modified molecular sieve.

In a preferred embodiment, the modification element is lanthanum and palladium; wherein the mass ratio of lanthanum to palladium calculated in terms of oxide is 1:(0.05-0.5), more preferably 1:(0.1-0.3).

The inventors of the present disclosure have found through research that the acidity, amount, and distribution of molecular sieve diacid (Brønsted acid and Lewis acid) centers can be further regulated and controlled by using lanthanum and palladium for jointly modifying the molecular sieve. The synergistic effect of diacid can catalyze macromolecules in oil products to slightly crack under the condition of 300-450°C, avoid deep (secondary and tertiary) cracking, and reduce the generation of C₁ and C₂ alkanes.

In a preferred embodiment, the catalyst has a crush strength within the range of 40-50N, preferably within the range of 43-48N; a specific surface area within the range of 100-160m²/g, preferably within the range of 115-145m²/g; a pore volume within the range of 0.3-0.4cm³/g, preferably within the range of 0.33-0.38cm³/g; and an average pore size within the range of 5-25nm, preferably within the range of 10-20 nm.

The second aspect of the present disclosure provides a method for prepararing the oil modification catalyst comprising the following steps:
(1) loading a modification element on a molecular sieve to obtain the modified molecular sieve powder; wherein the modification element is selected from lanthanum and/or palladium, and the molecular sieve is selected from a USY molecular sieve and/or Beta molecular sieve;
(2) subjecting a carrier precursor and a pore former to a resonant mixing to obtain a mixture I; wherein the carrier precursor comprises a zinc oxide powder, pseudo-boehmite, an optional titanium oxide powder, an optional zirconia powder, and the modified molecular sieve powder; wherein at least one of the titanium oxide powder and the zirconia powder is contained;
(3) adding a primary active ingredient precursor to mixture I for performing a resonant mixing to obtain mixture II; wherein the primary active ingredient precursor is a soluble compound containing nickel and/or copper;
(4) blending the binder precursor and the mixture II and then performing a granulation molding and a first roasting to obtain solid particles;
(5) impregnating a secondary active ingredient precursor on the solid particles and performing a second roasting to prepare the oil modification catalyst; wherein the secondary active ingredient is one or more selected from the soluble compounds of potassium, cobalt, molybdenum, and iron.

In step (1):
In a preferred embodiment, the loading comprises initially immersing the molecular sieve in a modification element-containing solution, followed by drying and roasting to obtain a modified molecular sieve powder.

In a preferred embodiment, the modification element-containing solution is a solution of a soluble compound containing lanthanum and/or a soluble compound containing palladium. In the present disclosure, the soluble compound containing lanthanum and the soluble compound containing palladium are not particularly limited, for example, the soluble compounds are lanthanum nitrate and palladium nitrate.

In a preferred embodiment, the molecular sieve has a silica/alumina ratio within the range of 10-100, more preferably within the range of 30-60. Among them, the catalytic activity of the modification catalyst can be further improved by selecting a specific silica/alumina ratio.

In a preferred embodiment, the molecular sieve is selected from a USY molecular sieve and/or Beta molecular sieve.

In a preferred embodiment, the feeding of the molecular sieve and the modification element-containing solution causes the content of said modification element calculated in terms of oxide to be within the range of 0.1-5wt%, more preferably within the range of 1-3wt%, based on the total amount of the modified molecular sieve powder.

In a preferred embodiment, the modification element is lanthanum and palladium; wherein the feeding of said modification element-containing solution causes the mass ratio of lanthanum to palladium calculated in terms of oxide is 1:(0.05-0.5), more preferably 1:(0.1-0.3).

In a preferred embodiment, the operating conditions of said immersing comprise a treatment at 30-85°C for 2-10h, more preferably a treatment at 50-70°C for 4-6h.

In step (2):
In a preferred embodiment, the zinc oxide powder is a nanometer zinc oxide with a large pore size, further preferably, the zinc oxide powder has a pore size within the range of 10-50nm, more preferably within the range of 20-40nm.

Wherein the pore size of the zinc oxide powder is an average pore size. The present inventors have discovered through research that the nanometer zinc oxide with a large pore size is beneficial to the diffusion of high-viscosity medium and heavy oil into the catalyst, and the contact efficiency of said oil product and the catalyst active site is improved, so that the deep desulfurization of macro-molecular sulfides in the medium and heavy oil with a high sulfur content can be accomplished.

In a preferred embodiment, the pseudo-boehmite has a pore volume within the range of 0.2-1mL/g, more preferably within the range of 0.4-0.8mL/g, a specific surface area within the range of 150-300m²/g, more preferably within the range of 180-260m²/g, and a peptization index greater than or equal to 92%, more preferably greater than or equal to 95%.

In a preferred embodiment, the pore former is one or more selected from the group consisting of methylcellulose, carboxymethylcellulose, and sesbania cannabia powder.

In a preferred embodiment, the feeding of the carrier precursor causes the prepared modification catalyst carrier comprises 65-85wt% of zinc oxide, 8-22wt% of alumina, 0-5wt% of titanium oxide or zirconia, and 4-10wt% of modified molecular sieve, based on the total amount of the carrier, wherein the content of titanium oxide and the content of zirconia are not zero at the same time.

In a further preferred embodiment, the feeding of the carrier precursor causes the prepared modification catalyst carrier to comprise 70-80wt% of zinc oxide, 12-18wt% of alumina, 3-5wt% of titanium oxide or zirconia, and 5-7wt% of modified molecular sieve, based on the total amount of the carrier.

In a preferred embodiment, the mass ratio of the pore former to zinc oxide powder in the carrier precursor is 1:(10-45), more preferably 1:(20-35).

The inventors of the present disclosure have discovered in research that the mechanical strength of said catalyst is decreased by using zinc oxide having a large pore size as a carrier to improve the desulfurization effect of the medium and heavy oils. The components of the catalyst can be uniformly dispersed by adopting a resonant mixing process, in addition, the alumina and/or silicon oxide are adopted as a binder, and the synergy of the resonant mixing and the binder is conducive to enhancing the intensity of the catalyst and improving the desulfurization and demetallization effects of said catalyst.

In step (3):
In a preferred embodiment, the nickel-containing soluble compound is one or more selected from the group consisting of nickel nitrate, nickel acetate, and nickel chloride; and the copper-containing soluble compound is one or more selected from the group consisting of copper nitrate, copper sulfate, and copper chloride.

In a preferred embodiment, the primary active ingredient precursor is added to mixture I in the form of an aqueous solution. The concentration of the primary active ingredient precursor in the aqueous solution is not particularly limited in the present disclosure, and the mass concentration may be within the range of 5-30%, for example, 5%, 8%, 10%, 15%, 20%, 30%, and a random numerical value within the range between any two point values.

In a preferred embodiment, the mass ratio of the primary active metal precursor to the carrier precursor in mixture I is (8-15):(65-85), more preferably (10-13):(70-80), based on the mass of the oxide corresponding to the metal element in the primary active metal precursor.

That is, in the present disclosure, the feeding of the primary active ingredient precursor and the mixture I cause the prepared modification catalyst contains 8-15wt%, preferably 10-13wt% of the primary active ingredient, and 65-85wt%, preferably 70-80wt% of the carrier, based on the total mass of the catalyst.

In a preferred embodiment, adding a primary active ingredient precursor to the mixture I and subsequently performing a resonant mixing to improve uniformity of mixing. Among them, the operating conditions of resonant mixing in step (3) are preferably the same as those in step (2).

In step (4):
In a preferred embodiment, the binder precursor is selected from an aluminum sol or a silicon sol, more preferably an aluminum sol.

In a preferred embodiment, the mass ratio of the binder precursor to the carrier precursor in mixture II is (5-15):(65-85), more preferably (7-13):(70-80), based on the mass of the oxide corresponding to the aluminum or silicon element in the binder precursor.

That is, in the present disclosure, the feeding of said binder precursor causes the prepared modification to contain 5-15wt% of the binder, more preferably 7-13wt% of the binder, based on the total mass of the catalyst.

In a preferred embodiment, the mixing manner of the binder precursor and the mixture II is not particularly limited in the present disclosure, it may be mechanical stirring for example.

In a preferred embodiment, the granules obtained after said granulation molding have an average particle size within the range of 0.5-10mm, more preferably within the range of 0.5-5mm.

In a preferred embodiment, the operating conditions of the first roasting comprise a first roasting temperature within the range of 400-700°C and a first roasting time within the range of 1-10h, further preferably, a first roasting temperature within the range of 400-550°C and a first roasting time within the range of 3-10h.

In a preferred embodiment, the granules obtained after granulation molding are dried at room temperature for 12-48h and then dried at 60-120°C for 2-24h before the first roasting.

In step (5):
In a preferred embodiment, the soluble compounds of potassium, cobalt, molybdenum, and iron are not particularly limited in the present disclosure, the commonly used soluble compounds of potassium, cobalt, molybdenum, and iron in the art can be utilized in the present disclosure.

In a preferred embodiment, the secondary active ingredient precursor is selected from a soluble compound of cobalt and/or molybdenum.

In a preferred embodiment, the mass ratio of the secondary active ingredient precursor to the carrier precursor in the solid particles is (2-5):(65-85), more preferably (3-4):(70-80), based on the mass of the metal oxide in the secondary active ingredient precursor.

That is, in the present disclosure, the feeding of said secondary active ingredient precursor causes the prepared modification catalyst to comprise 2-5wt% of the secondary active ingredient, preferably 3-4wt% of the secondary active ingredient, based on the total mass of the catalyst.

In a preferred embodiment, the impregnation method is not particularly limited in the present disclosure, the impregnation may be an equal-volume impregnation or an over-dosage impregnation.

In a preferred embodiment, the operating conditions of impregnating comprise an impregnation temperature within the range of 20-90°C and an impregnation time within the range of 1-24h, further preferably an impregnation temperature within the range of 30-50°C and an impregnation time within the range of 8-24h.

In a preferred embodiment, the impregnated solid particles are dried at room temperature for 12-48 hours and then dried at 60-120°C for 2-24 hours before subjecting to the second roasting.

In a preferred embodiment, the operating conditions of second roasting comprise a second roasting temperature within the range of 400-700°C and a second roasting time within the range of 1-10h, further preferably, a second roasting temperature within the range of 400-550°C and a second roasting time within the range of 4-6h.

The third aspect of the present disclosure provides a first oil modification method comprising reducing the catalyst according to the first aspect and subsequently contacting the catalyst with an oil product and hydrogen gas to carry out a modification reaction to obtain a modified oil product.

In a preferred embodiment, the operating conditions of reducing comprise a reducing pressure within the range from atmospheric pressure to 3.5MPa, more preferably within the range from atmospheric pressure to 1.25MPa; a reducing temperature within the range of 250-550°C, more preferably within the range of 300-400°C; a reduction treatment time within the range of 2-8h, more preferably within the range of 3-6h; an hourly space velocity of hydrogen gas within the range of 500-4,500 h⁻¹, more preferably within the range of 2,000-4,000 h⁻¹. Unless otherwise specified in the present disclosure, the pressure is gauge pressure, and the atmospheric pressure has a well-known meaning in the art.

In a preferred embodiment, the reducing gas in the reduction process is hydrogen gas, wherein the reducing gas may be high-purity hydrogen gas with a hydrogen volume fraction of 90-100%, or the reformate hydrogen gas from a catalytic cracking unit.

In a preferred embodiment, the oil product comprises medium oil and heavy oil, wherein the medium oil and the heavy oil are products obtained by processing crude oil, the medium oil has a distillation range within the range of 250-450°C, and the heavy oil has a distillation range larger than 450°C. Preferably, the oil product may further comprise directly extracted crude oil, in particular heavy crude oil.

In a preferred embodiment, the medium oil has a sulfur content within the range of 0.3-1wt%, and the heavy oil has a sulfur content within the range of 0.5-3.5wt%.

In a preferred embodiment, the oil product is selected from the group consisting of straight-run diesel, catalytic diesel, catalytic slurry oil, coking raw material, coker diesel, coker wax oil, atmospheric residuum, vacuum residuum, wax oil, heavy crude oil, and a mixture thereof. Among them, the oil products have the conventional meaning in the field, and the content is not repeatedly described herein.

In a preferred embodiment, the operating conditions of modification reaction comprise a reaction temperature within the range of 300-450°C, more preferably within the range of 350-450°C; a reaction pressure within the range of 1-10MPa, more preferably within the range of 3-7MPa; an hourly space velocity of hydrogen gas within the range of 0.2-0.8 h⁻¹, more preferably within the range of 0.4-0.6 h⁻¹; and a hydrogen/oil ratio within the range of 100-500, more preferably within the range of 200-400.

In the present disclosure, the hydrogen/oil ratio is the volume flow ratio of the reactive hydrogen gas to the oil product. The catalyst of the present disclosure has a desirable desulfurization effect on medium oil, especially high-sulfur medium oil, and the desulfurization rate is more than 85%. When the catalyst of the present disclosure is used for modifying heavy oil, the catalyst can integrate efficient desulfurization, efficient demetallization, and efficient viscosity reduction, can greatly reduce the sulfur content, the metal content, the density and viscosity of a modified product, and improve API degree of the product. The modified oil product obtained in the present disclosure may be subjected to subsequent processing according to actual needs and conventional operation, the content is not repeatedly described herein.

The fourth aspect of the present disclosure provides a second oil modification method comprising the following steps:
(1) reducing a material containing a fresh catalyst in the presence of hydrogen gas to obtain an active catalyst;
(2) contacting an oil product and reactive hydrogen gas with the active catalyst in a moving bed reactor to carry out an adsorptive desulfurization modification reaction to obtain a modification outcome and a post-reaction catalyst;
(3)separating the modification outcome to obtain a modified product;
(4) subjecting the post-reaction catalyst to a first-stage regeneration to obtain a first-stage regenerant;
(5) subjecting the first-stage regenerant to a second-stage regeneration to obtain a regenerated catalyst;
(6) returning the regenerated catalyst to the materials in step (1) for recycling.

In step (1):
In a preferred embodiment, the fresh catalyst is the same as the catalyst according to the first aspect of the present disclosure, it can be prepared with the preparation method of the oil modification catalyst according to the second aspect of the present disclosure.

In a preferred embodiment, the material containing a fresh catalyst is a fresh catalyst or a mixed material of a fresh catalyst and a regenerated catalyst.

In a preferred embodiment, the operating conditions of reducing comprise a reducing temperature within the range of 250-550°C, more preferably within the range of 300-400°C; a reducing pressure within the range from atmospheric pressure to 3.5MPa, more preferably within the range from atmospheric pressure to 1.25MPa; a reducing time within the range of 2-8h, more preferably within the range of 3-6h; an hourly space velocity of hydrogen gas within the range of 500-4,500 h⁻¹, more preferably within the range of 2,000-4,000 h⁻¹. Unless otherwise specified in the present disclosure, the pressure is gauge pressure, and the atmospheric pressure has a well-known meaning in the art.

In a preferred embodiment, the reducing gas in the reduction process is hydrogen gas, wherein the reducing gas may be high-purity hydrogen gas with a hydrogen volume fraction of 90-100%, or the reformate hydrogen gas from a catalytic cracking unit.

In step (2):
In a preferred embodiment, the oil product comprises medium oil and heavy oil, wherein the medium oil and the heavy oil are products obtained by processing crude oil, the medium oil has a distillation range within the range of 250-450°C, and the heavy oil has a distillation range larger than 450°C. Preferably, the oil product may further comprise directly extracted crude oil, in particular heavy crude oil.

In a preferred embodiment, the medium oil has a sulfur content within the range of 0.3-1wt%, and the heavy oil has a sulfur content within the range of 0.5-3.5wt%.

In a preferred embodiment, the oil product is selected from the group consisting of straight-run diesel, catalytic diesel, catalytic slurry oil, coking raw material, coker diesel, coker wax oil, atmospheric residuum, vacuum residuum, wax oil, heavy crude oil, and a mixture thereof. Among them, the oil products have the conventional meaning in the field, and the content is not repeatedly described herein.

In a preferred embodiment, the moving bed reactor is preferably a medium-pressure gas-liquid-solid moving bed reactor, wherein the medium pressure in the medium-pressure gas-liquid-solid moving bed reactor refers to 1.6 MPa-10.0 MPa.

The contact mode of the oil product and the catalyst is not particularly limited in the present disclosure, the oil product and the catalyst may have a concurrent contact or a countercurrent contact. The feeding direction of the oil product in the moving bed reactor is not specially limited, and the feeding direction can be from top to bottom, or from bottom to top.

In a preferred embodiment, the operating conditions of said adsorptive desulfurization modification comprise a reaction temperature within the range of 300-450°C, more preferably within the range of 350-450°C; a reaction pressure within the range of 1-10MPa, more preferably within the range of 3-7MPa; an hourly space velocity of hydrogen gas within the range of 0.2-0.8 h⁻¹, more preferably within the range of 0.4-0.6 h⁻¹; and a hydrogen/oil ratio within the range of 100-500, more preferably within the range of 200-400. In the present disclosure, the hydrogen/oil ratio refers to the volume flow ratio of the reactive hydrogen gas to the oil product.

In step (3):
In a preferred embodiment, the separating is flash evaporation to separate the modification outcome to yield a modified product, a C3 ingredient, and a hydrogen-rich tail gas. Wherein the C3 ingredient is propane. The operating conditions of the flash evaporation are not specially limited in the present disclosure, and the flash evaporation separation of the modified product can be carried out according to the conventional operation in the field.

In a preferred embodiment, the hydrogen-rich tail gas is subjected to hydrogen separation to obtain a dry gas and a recycled hydrogen gas; wherein the recycled hydrogen gas is circularly added into the reactive hydrogen gas in step (2). In the present disclosure, the recycled hydrogen gas is separated from the modified product and returned to step (2) and used as the reactive hydrogen gas, so that the utilization rate of hydrogen gas can be improved, and the hydrogen consumption can be reduced.

In a preferred embodiment, step (3) further comprises: dividing the modified product into part a and part b, wherein said part a is circularly added into the oil product in step (2), said part b is output as the finished product.

In the present disclosure, a portion of the modified product is preferably recycled to step (2) and used as an oil product for reopening the adsorptive desulfurization modification reaction, it can further reduce the viscosity, API degree, sulfur content, and metal content of the product. In the present disclosure, the part a accounts for 0-80wt% of the total mass of the modified product.

In step (4):
In a preferred embodiment, the method further comprises: before said first-stage regeneration, said post-reaction catalyst is preferably cleaned with an oil washing liquid; wherein the oil washing liquid is one or more selected from the group consisting of gasoline fraction, mono-aromatic hydrocarbon fraction (including but not limited to toluene, xylene, trimethylbenzene, and ethylbenzene), mixed aromatic hydrocarbon fraction (including but not limited to the combination of two or more of toluene, xylene, trimethylbenzene, and ethylbenzene), preferably a gasoline fraction.

In the present disclosure, before the post-reaction catalyst is subjected to a first-stage regeneration, the post-reaction catalyst can be initially cleaned by using an oil-washing liquid, or the post-reaction catalyst can be directly subjected to the first-stage regeneration treatment. Compared with the method of directly carrying out the first-stage regeneration treatment on the post-reaction catalyst, the method for carrying out the first-stage regeneration on the post-reaction catalyst by cleaning the catalyst with the oil washing liquid can further remove oil products adhered to the surface of the inactivated catalyst and adsorbed in pore channels, reduce the emission of carbon dioxide in the regeneration process, and improve the activity recovery degree of the regenerated catalyst.

In a preferred embodiment, the operating conditions of said cleaning comprise: a mass ratio of the oil washing liquid to the post-reaction catalyst is (1-2):1, a cleaning pressure within the range of 1-10MPa, preferably the same as the reaction pressure of the adsorptive desulfurization modification reaction; and a cleaning temperature within the range of 350-430°C.

In a preferred embodiment, the spent oil-washing liquid obtained after the washing process may be subjected to a distillation process to improve the utilization of the oil-washing liquid and maximize the recovery of the modified products, wherein the spent oil-washing liquid comprises oil-washing liquid and components rinsed from the post-reaction catalyst, the oil-washing liquid can be recycled through the distillation treatment, the oil washing liquid is reused, and the remaining part after the distillation treatment can be mixed with the modified product (or part b of the modified product) and then output as the finished product.

In a preferred embodiment, the operating conditions for the first-stage regeneration comprise a first-stage regeneration pressure within the range of 0.01-1MPa, more preferably within the range of 0.1-0.5MPa; a first-stage regeneration temperature within the range of 320-480°C, more preferably within the range of 360-440°C; an hourly space velocity of first-stage regenerated gas within the range of 500-4,000 h⁻¹, more preferably within the range of 1,000-3,000 h⁻¹; and oxygen content of the first-stage regenerated gas within the range of 0.8-5.5v%, more preferably within the range of 1.2-4.2v%. In the present disclosure, hydrocarbons and carbon deposits on the surface of the catalyst can be removed through the first-stage regeneration. The first-stage regenerated gas is the mixture of air and nitrogen gas, and the oxygen content is adjusted by mixing nitrogen gas into air.

In step (5):
In a preferred embodiment, the method further comprises: dividing the one-stage regenerant of step (5) into part A and part B, contacting part A with a reactivation liquid to perform a reactivation treatment to obtain a reactivated product; and subjecting the reactivated product and the part B to a second-stage regeneration.

In the present disclosure, a portion of the first-stage regenerant contacts with the reactivation liquid for carrying out the regeneration treatment, so that metal ions attached to the surface and the pore channels of the catalyst can be removed, the structure of said catalyst is restored, the inactivation problem caused by the reduced specific surface and the blockage of pore channels of the catalyst is solved, such that the catalyst can restore the reactivity.

In a preferred embodiment, the content of said part A accounts for 0-50% of the total mass of said first-stage regenerant. In the present disclosure, when the content of metal in the oil product is less than 10µg/g, the first-stage regenerant can be directly subjected to the second-stage regeneration without carrying out the reactivation treatment on the first-stage regenerant. When the content of metal in the oil product is more than or equal to 10µg/g, 10-50% of the first-stage regenerant is preferably subjected to the reactivation treatment.

In a preferred embodiment, the reactivation liquid is one or more selected from the group consisting of acetic acid, formic acid, citric acid, oxalic acid, and nitric acid. In the present disclosure, the nitric acid is preferably dilute nitric acid having a mass concentration of 1-5%, the reactivation liquid is preferably acetic acid, more preferably pure acetic acid having a mass concentration of 98% or more.

In a preferred embodiment, the operating conditions of reactivation comprise: a mass ratio of part A in the first-stage regenerant to the reactivation liquid is (1-2): 1, a reactivation pressure within the range of 0.1-1MPa, and a reactivation temperature within the range of 60-160°C.

In a preferred embodiment, the operating conditions of second-stage regeneration comprise a second-stage regeneration pressure within the range of 0.01-1MPa, more preferably within the range of 0.1-0.5MPa; a second-stage regeneration temperature within the range of 420-570°C, more preferably within the range of 440-550°C; an hourly space velocity of second-stage regenerated gas within the range of 500-4,500 h⁻¹, more preferably within the range of 1,000-3,000 h⁻¹; and an oxygen content of the second-stage regenerated gas within the range of 3-15v%, more preferably within the range of 4.2-12.6v%.

In the present disclosure, the second-stage regeneration can convert the zinc sulfide in the first-stage regenerant and/or the reactivated product into zinc oxide again, thereby restoring the activity of said catalyst. The second-stage regenerated gas is a mixed gas of air and nitrogen gas, and the content of oxygen gas is adjusted by mixing nitrogen gas into the air.

In a preferred embodiment, the second-stage regeneration temperature is higher than the first-stage regeneration temperature; further preferably, the second-stage regeneration temperature is 60-110°C higher than the first-stage regeneration temperature.

In a preferred embodiment, the oxygen content of the second-stage regenerated gas is higher than the oxygen content of the first-stage regenerated gas, further preferably, the oxygen content of the second-stage regenerated gas is higher than the oxygen content of the first-stage regenerated gas by 2.9-11 v%.

In a preferred embodiment, the method further comprises: performing desulfurization treatment on the regenerated flue gas generated in the first-stage regeneration and the second-stage regeneration and then discharging the flue gas. In the present disclosure, it is preferable to perform the desulfurization treatment on the regenerated flue gas by using a flue gas desulfurization system.

In step (6):
In a preferred embodiment, the method further comprises: dividing the regenerated catalyst in step (6) into a recycled catalyst and a waste catalyst, returning the recycled catalyst to the materials in step (1) for recycling, adding a fresh catalyst with an equivalent amount of the waste catalyst at the same time of returning the recycled catalyst to the materials in step (1).

In a preferred embodiment, the waste raw catalyst accounts for 0.01-5wt% of the total mass of the regenerated catalyst.

The oil adsorptive desulfurization modification method provided by the present disclosure is carried out in a moving bed reactor, and through the coupling of the two stages regeneration and the preferable reactivation treatment, the activity of the regenerated catalyst can be obviously improved, the service life of said catalyst is prolonged, thereby realizing the continuous production of the oil adsorptive desulfurization modification.

The fifth aspect of the present disclosure provides an oil adsorptive desulfurization modification system, the system comprising a restorer (1), a moving bed reactor (2), a separation tower (3), a first-stage regenerator (4), and a second-stage regenerator (5);
wherein the restorer (1) is connected end-to-end with the moving bed reactor (2), the first-stage regenerator (4), and the second-stage regenerator (5); the separation tower (3) is connected with the moving bed reactor (2), as shown in FIG. 1.

In a preferred embodiment, the moving bed reactor (2) is a medium-pressure gas-liquid-solid moving bed reactor.

In a preferred embodiment, the system further comprises an oil washing device including an oil washer (6) and a fractionating tower (7); wherein the oil washer (6) is arranged between the moving bed reactor (2) and first-stage regenerator (4); the fractionating tower (7) is connected with the oil washer (6) for separating the spent oil washing liquid which comes from the oil washer (6) and returning the separated oil washing liquid to the oil washer (6).

In a preferred embodiment, the system further comprises a rejuvenator (8), which is connected in parallel to the pipeline of the first-stage regenerator (4) and the second-stage regenerator (5).

In a preferred embodiment, the system further comprises a separator (9) disposed between the second-stage regenerator (5) and the restorer (1) for removing the broken regenerated catalyst (i.e., the waste catalyst).

In a preferred embodiment, a locking hopper (10) is provided in front of a feed inlet of the restorer (1), the moving bed reactor (2), the first-stage regenerator (4), the second-stage regenerator (5), the oil washer (6), and the rejuvenator (8), respectively.

In a preferred embodiment, a lifter (11) is provided at an outlet of the second-stage regenerator (5) and an outlet of the oil washer (6) respectively, the lifter (11) is used for transporting solid materials.

In a preferred embodiment, a heat exchanger is provided between the moving bed reactor (2) and the separation power (3), and a flow meter is provided between the separator (9) and the restorer (1).

In a preferred embodiment, the system further comprises a flue gas desulfurization system (12), which is connected with the first-stage regenerator (4) and the second-stage regenerator (5).

In a preferred embodiment, the system further comprises a hydrogen separation unit (13) disposed between the moving bed reactor (2) and the separation tower (3). In the present disclosure, the hydrogen gas in the moving bed reactor (2) includes hydrogen gas from the restorer (1), externally supplementary hydrogen, and recycled hydrogen gas separated from the hydrogen separation unit (13).

The specific device type in the oil adsorptive desulfurization modification system is not particularly limited in the present disclosure, it can be conventionally selected according to the requirements in the actual use.

The present disclosure will be described in detail below with reference to examples. In the examples and comparative examples, the USY molecular sieve was purchased from AOS Catalyst Material (Dalian) Co., Ltd., the silica/alumina ratio was 50, the specific surface area was larger than 650 m²/g, and the pore size was 0.74nm. Beta molecular sieve was purchased from AOS Catalyst Material (Dalian) Co., Ltd., the silica/alumina ratio was 50, the specific surface area was larger than 500 m²/g, and the pore size was 0.55-0.76 nm.

Zinc oxide powder with a purity of 99.5% and a pore size of 30nm was purchased from Shandong Jinyuan New Materials Technology Co., Ltd. The small-pore zinc oxide powder with a purity of 99.5% and a pore size of 8nm was purchased from Shandong Jinyuan New Materials Technology Co., Ltd.

The pseudo-boehmite was commercially available from Zibo Jinqi Chemical Technology Co., Ltd., the pore volume was within the range of 0.4mL/g-0.8mL/g, the specific surface area was within the range of 180m²/g-260m²/g, and the peptization index was more than 95%.

The solid content of the aluminum sol was 20wt%, and the solid content of the silica sol was 20 wt%.

### Preparation Example of Catalyst

### Example 1

(1) 0.18g of lanthanum nitrate hexahydrate and 0.07g of palladium nitrate dihydrate were added into 110g of water to form a mixed solution, 100g of USY molecular sieve and the mixed solution were put in a stirring reaction kettle, and immersed at the normal pressure and 30°C for 10 hours, suction filtration was performed after completion of the immersion, a filter cake was dried at the temperature of 60°C for 24 hours, the dried filter cake was subjected to roasting and modifying at 450°C for 8 hours to obtain the modified USY molecular sieve powder with the lanthanum oxide (La₂O₃) content of 0.067wt% and the palladium oxide (PdO) content of 0.033 wt%;
(2) 423g of zinc oxide powder, 140g of pseudo-boehmite (calculated in terms of alumina), 32g of titanium oxide powder, 55g of lanthanum and palladium modified USY molecular sieve powder, and 12.7g of methyl cellulose were blended uniformly in a resonance mixer to obtain a mixture I;
(3) 525.4g of nickel nitrate hexahydrate and 45.5g of copper nitrate trihydrate were added into 2,800g of water to prepare a mixed solution, which was added into a resonance mixer, the mixed solution was mingled with mixture I to obtain a mixture II;
(4) 750g of alumina sol and mixture II were stirred uniformly in a kneader, then put in a ball extruder to extrude into spherules having a particle diameter of 0.6mm, the spherules were naturally dried at normal temperature condition for 12 hours, then dried at 60°C for 24 hours, subsequently roasted at 400°C for 10 hours to obtain solid particles;
(5) 107.4g of potassium nitrate was added into 2,000g of water to prepare an impregnation liquid, all the solid particles were put into the impregnation liquid and impregnated at normal temperature for 24 hours; the solid particles were naturally dried at normal temperature condition for 30 hours, then dried at 120°C for 4 hours, subsequently roasted at 400°C for 6 hours to obtain the catalyst.

### Example 2

(1) 2.42g of lanthanum nitrate hexahydrate and 0.2g of palladium nitrate dihydrate were added into 162g of water to form a mixed solution, 100g of Beta molecular sieve and the mixed solution were put in a stirring reaction kettle, and immersed at the normal pressure and 50°C for 6 hours, suction filtration was performed after completion of the immersion, a filter cake was dried at the temperature of 60°C for 24 hours, the dried filter cake was subjected to roasting and modifying at 550°C for 3 hours to obtain the modified Beta molecular sieve powder with the lanthanum oxide (La₂O₃) content of 0.91wt% and the palladium oxide (PdO) content of 0.09wt%;
(2) 496g of zinc oxide powder, 131g of pseudo-boehmite (calculated in terms of alumina), 24g of zirconia powder, 54g of lanthanum and palladium modified Beta molecular sieve powder, and 19.9g of methyl cellulose were blended uniformly in a resonance mixer to obtain a mixture I;
(3) 333.1g of nickel acetate tetrahydrate and 31.4g of copper sulfate pentahydrate were added into 2,600g of water to prepare a mixed solution, which was added into a resonance mixer, the mixed solution was mingled with mixture I to obtain a mixture II;
(4) 700g of silicon sol and mixture II were stirred uniformly in a kneader, then put in a ball extruder to extrude into spherules having a particle diameter of 2mm, the spherules were naturally dried at normal temperature for 12 hours, then dried at 60°C for 24 hours, subsequently roasted at 500°C for 3 hours to obtain solid particles;
(5) 157.9g of cobalt nitrate hexahydrate was added into 2,200g of water to prepare an impregnation liquid, all the solid particles were put into the impregnation liquid and impregnated at 45°C for 10 hours; the solid particles were naturally dried at normal temperature for 30 hours, then dried at 120°C for 4 hours, subsequently roasted at 450°C for 5 hours to prepare the catalyst.

### Example 3

(1) 4.44g of lanthanum nitrate hexahydrate and 0.72g of palladium nitrate dihydrate were added into 180g of water to form a mixed solution, 100g of USY molecular sieve and the mixed solution were put in a stirring reaction kettle, and immersed at the normal pressure and 60°C for 5 hours, suction filtration was performed after completion of the immersion, a filter cake was dried at the temperature of 60°C for 24 hours, the dried filter cake was subjected to roasting and modifying at 525°C for 4.5 hours to obtain the modified USY molecular sieve powder with the lanthanum oxide (La₂O₃) content of 1.67wt% and the palladium oxide (PdO) content of 0.33wt%;
(2) 568.5g of zinc oxide powder, 105g of pseudo-boehmite (calculated in terms of alumina), 31.5g of titanium oxide powder, 45g of lanthanum and palladium modified USY molecular sieve powder, and 28.4g of Sesbania cannabia powder were blended uniformly in a resonance mixer to obtain a mixture I;
(3) 432g of nickel acetate tetrahydrate and 28.3g of copper sulfate pentahydrate were added into 3,000g of water to prepare a mixed solution, which was added into a resonance mixer, the mixed solution was mingled with mixture I to obtain a mixture II;
(4) 500g of alumina sol and mixture II were stirred uniformly in a kneader, then put in a ball extruder to extrude into spherules having a particle diameter of 2mm, the spherules were naturally dried at normal temperature for 12 hours, then dried at 60°C for 24 hours, subsequently roasted at 550°C for 4 hours to obtain solid particles;
(5) 40.8g of ammonium molybdate was added into 2,500g of water to prepare an impregnation liquid, all the solid particles were put into the impregnation liquid and impregnated at 50°C for 9 hours; the solid particles were naturally dried at normal temperature for 30 hours, then dried at 120°C for 4 hours, subsequently roasted at 550°C for 4 hours to prepare the catalyst.

### Example 4

(1) 6.14g of lanthanum nitrate hexahydrate and 1.5g of palladium nitrate dihydrate were added into 200g of water to form a mixed solution, 100g of Beta molecular sieve and the mixed solution were put in a stirring reaction kettle, and immersed at the normal pressure and 70°C for 4 hours, suction filtration was performed after completion of the immersion, a filter cake was dried at the temperature of 60°C for 24 hours, the dried filter cake was subjected to roasting and modifying at 500°C for 6 hours to obtain the modified Beta molecular sieve powder with the lanthanum oxide (La₂O₃) content of 2.31wt% and the palladium oxide (PdO) content of 0.69wt%;
(2) 640g of zinc oxide powder, 88g of pseudo-boehmite (calculated in terms of alumina), 32g of zirconia powder, 40g of lanthanum and palladium modified Beta molecular sieve powder, and 38.4g of methyl cellulose were blended uniformly in a resonance mixer to obtain a mixture I;
(3) 328.1g of nickel acetate tetrahydrate and 19.7g of copper sulfate pentahydrate were added into 2,500g of water to prepare a mixed solution, which was added into a resonance mixer, the mixed solution was mingled with mixture I to obtain a mixture II;
(4) 350g of silicon sol and mixture II were stirred uniformly in a kneader, then put in a ball extruder to extrude into spherules having a particle diameter of 2.5mm, the spherules were naturally dried at normal temperature for 12 hours, then dried at 60°C for 24 hours, subsequently roasted at 600°C for 3 hours to obtain solid particles;
(5) 126.3g of ferric nitrate nonahydrate was added into 2,700g of water to prepare an impregnation liquid, all the solid particles were put into the impregnation liquid and impregnated at 55°C for 12 hours; the solid particles were naturally dried at normal temperature for 30 hours, then dried at 120°C for 4 hours, subsequently roasted at 650°C for 3 hours to prepare the catalyst.

### Example 5

(1) 7.6g of lanthanum nitrate hexahydrate and 2.48g of palladium nitrate dihydrate were added into 194g of water to form a mixed solution, 100g of USY molecular sieve and the mixed solution were put in a stirring reaction kettle, and immersed at the normal pressure and 40°C for 8 hours, suction filtration was performed after completion of the immersion, a filter cake was dried at the temperature of 60°C for 24 hours, the dried filter cake was subjected to roasting and modifying at 480°C for 7 hours to obtain the modified USY molecular sieve powder with the lanthanum oxide (La₂O₃) content of 2.86wt% and the palladium oxide (PdO) content of 1.14wt%;
(2) 707g of zinc oxide powder, 76g of pseudo-boehmite (calculated in terms of alumina), 31.8g of titanium oxide powder, 35.2g of lanthanum and palladium modified USY molecular sieve powder, and 49.5g of carboxymethyl cellulose were blended uniformly in a resonance mixer to obtain a mixture I;
(3) 295g of nickel nitrate hexahydrate and 13.2g of copper sulfate pentahydrate were added into 2,200g of water to prepare a mixed solution, which was added into a resonance mixer, the mixed solution was mingled with the mixture I to obtain a mixture II;
(4) 250g of alumina sol and mixture II were stirred uniformly in a kneader, then put in a ball extruder to extrude into spherules having a particle diameter of 5mm, the spherules were naturally dried at normal temperature for 12 hours, then dried at 60°C for 24 hours, subsequently roasted at 650°C for 4 hours to obtain solid particles;
(5) 43g of potassium nitrate was added into 2,800g of water to prepare an impregnation liquid, all the solid particles were put into the impregnation liquid and impregnated at 60°C for 8 hours; the solid particles were naturally dried at normal temperature for 30 hours, then dried at 120°C for 4 hours, subsequently roasted at 600°C for 4 hours to prepare the catalyst.

### Example 6

(1) 12.65g of lanthanum nitrate hexahydrate and 0.52g of palladium nitrate dihydrate were added into 198g of water to form a mixed solution, 100g of Beta molecular sieve and the mixed solution were put in a stirring reaction kettle, and immersed at the normal pressure and 85°C for 2 hours, suction filtration was performed after completion of the immersion, a filter cake was dried at the temperature of 60°C for 24 hours, the dried filter cake was subjected to roasting and modifying at 600°C for 2 hours to obtain the modified Beta molecular sieve powder with the lanthanum oxide (La₂O₃) content of 4.76wt% and the palladium oxide (PdO) content of 0.24wt%;
(2) 613.4g of zinc oxide powder, 97.6g of pseudo-boehmite (calculated in terms of alumina), 36.1g of zirconia powder, 32.9g of lanthanum and palladium modified Beta molecular sieve powder, and 49.1g of Sesbania cannabia powder were blended uniformly in a resonance mixer to obtain a mixture I;
(3) 266.5g of nickel acetate tetrahydrate and 30.4g of copper sulfate pentahydrate were added into 2,000g of water to prepare a mixed solution, which was added into a resonance mixer, the mixed solution was mingled with mixture I to obtain a mixture II;
(4) 450g of silicon sol and mixture II were stirred uniformly in a kneader, then put in a ball extruder to extrude into spherules having a particle diameter of 4mm, the spherules were naturally dried at normal temperature for 12 hours, then dried at 60°C for 24 hours, subsequently roasted at 700°C for 1 hour to obtain solid particles;
(5) 54.4g of ammonium molybdate was added into 3,000g of water to prepare an impregnation liquid, all the solid particles were put into the impregnation liquid and impregnated at 90°C for 1 hour; the solid particles were naturally dried at normal temperature for 30 hours, then dried at 120°C for 4 hours, subsequently roasted at 700°C for 2 hours to prepare the catalyst.

### Comparative Example 1

The catalyst was prepared according to the method in Example 3, except that the resonance mixer in step (2) and step (3) was replaced with mechanical stirring, and the modified catalyst was prepared.

### Comparative Example 2

The catalyst was prepared according to the method in Example 3, except that step (1) was omitted, 568.5g of zinc oxide powder, 150g of pseudo-boehmite, 31.5g of titanium oxide powder, and 28.4g of Sesbania cannabia powder were uniformly mixed in a resonance mixer in step (2) to obtain a mixture I, the modified catalyst was prepared.

### Comparative Example 3

The catalyst was prepared according to the method in Example 3, except that step (1) was omitted, and the molecular sieve which was not modified by lanthanum and palladium was used in step (2), the modified catalyst was prepared.

### Comparative Example 4

The catalyst was prepared according to the method in Example 3, except that the zinc oxide powder in step (2) was replaced with small-pore zinc oxide having a pore diameter of 8nm, the modified catalyst was prepared.

The component contents of the catalyst prepared in Examples and Comparative Examples were calculated according to the dosages of raw materials, and the calculation results were shown in Table 1:

**Table 1**

| Component content / wt% | | Exa mple 1 | Exa mple 2 | Exa mple 3 | Exa mple 4 | Exa mple 5 | Exa mple 6 | Com parat ive Exa mple 1 | Com parat ive Exa mple 2 | Com parat ive Exa mple 3 | Com parat ive Exa mple 4 |
|---|---|---|---|---|---|---|---|---|---|---|---|
| Carrier | | 65 | 70.5 | 75 | 80 | 85 | 78 | 75 | 75 | 75 | 75 |
| Primary active ingredient | | 15 | 11 | 12 | 10.5 | 8 | 9 | 12 | 12 | 12 | 12 |
| Secondary active ingredient | | 5/K | 4.5/ Co | 3/Mo | 2.5/ Fe | 2/K | 4/Mo | 3/Mo | 3/Mo | 3/Mo | 3/ Mo |
| Binder | | 151 Al | 14/Si | 10/ Al | 7/Si | 5/Al | 9/Si | 10/ Al | 10/ Al | 10/ Al | 10/ Al |
| Carrie r | Zinc oxide | 42.3 | 49.6 | 56.8 | 64 | 70.7 | 61.3 | 56.8 | 56.8 | 56.8 | 56.8 |
| | Alumin a | 14 | 13.1 | 10.5 | 8.8 | 7.6 | 9.8 | 10.5 | 15 | 10.5 | 10.5 |
| | Titaniu m oxide | 3.2 | - | 3.2 | - | 3.2 | - | 3.2 | 3.2 | 3.2 | 3.2 |
| | Zirconi a | - | 2.4 | - | 3.2 | - | 3.6 | - | - | - | - |
| | Modifie d molecula r sieve | 5.5/ U | 5.4/B | 4.5/ U | 4/B | 3.5/ U | 3.3/B | 4.5/ U | - | 4.5/ U 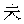 | 4.5/ U |
| Primary active ingredie nt | Nickel oxide | 13.5 | 10 | 11.1 | 9.8 | 7.6 | 8 | 11.1 | 11.1 | 11.1 | 11. 1 |
| | Copper oxide | 1.5 | 1 | 0.9 | 0.7 | 0.4 | 1 | 0.9 | 0.9 | 0.9 | 0.9 |

| | | | | | | | | | | | |
|---|---|---|---|---|---|---|---|---|---|---|---|
| Note: Al in a binder in Table 1 represents binder alumina, Si represents binder silicon oxide, U in a modified molecular sieve represents a USY molecular sieve, U 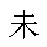 represents the unmodified USY molecular sieve, and B represents Beta molecular sieve. The content of each component in the carrier is calculated based on the total mass of the catalyst, and the contents of nickel oxide and copper oxide in the primary active ingredient are calculated based on the total mass of the catalyst. | | | | | | | | | | | |

### Test Example 1

The characterization of Brönsted acid and Lewis acid of USY molecular sieve, Beta molecular sieve, and modified molecular sieve powders prepared in Examples 1-6 were performed using a Nicolet IS 10 infrared spectrometer with the following method:
A sample to be tested was adsorbed with pyridine, and the acidity and the acid content of modified molecular sieve powder were characterized by Fourier infrared transform infrared spectroscopy, the test was carried out on a Nicolet IS 10 infrared spectrometer, each of the ranges of scanning wave number was 4000-400 cm⁻¹, and the scanning was performed for 64 times. The operation steps were as follows: a sample to be tested was pulverized into powder, and 10 mg of the powder was converted to a self-supporting thin sheet, which was put in a quartz vacuum infrared cell slot. The sample to be tested was purified and treated under the conditions of 400°C and vacuum (3.5×10⁻³ pa) for 4 hours and then cooled to room temperature. The scanning spectrogram was taken as a background and then heated to 150°C to adsorb pyridine, wherein the adsorption time was 0.5 h. After the adsorption process, vacuumizing and desorbing were implemented for 0.5 h. The pool of samples to be tested was cooled to room temperature, the spectrogram was scanned. The temperature was then raised to 300°C, and the vacuumization time was still 0.5h, finally cooled to room temperature, the spectrogram was scanned. The temperature was again raised to 450°C, and the vacuumization time was still 0.5h. The sample was finally cooled to room temperature, and the spectrogram was scanned, and the test results were shown in Table 2.

**Table 2**

| Samples | Py-IR | | | | | |
|---|---|---|---|---|---|---|
| | Brönsted acid 1.540 (µmol/g) | | | Lewis acid 1,450 (µmol/g) | | |
| | 150°C | 300°C | 450°C | 150°C | 300°C | 450°C |
| USY molecular sieve | 2.03 | 0.03 | 1.87 | 3.63 | 1.38 | 0.00 |
| Example 1 | 7.47 | 2.66 | 0.89 | 9.74 | 2.93 | 0.00 |
| Example 3 | 8.48 | 3.54 | 0.43 | 9.82 | 3.83 | 2.31 |
| Example 5 | 8.65 | 3.46 | 0.36 | 7.86 | 3.60 | 2.46 |
| Beta molecular sieve | 2.17 | 0.06 | 0.89 | 3.24 | 0.76 | 0.01 |
| Example 2 | 8.23 | 3.21 | 0.38 | 8.45 | 3.48 | 2.55 |
| Example 4 | 7.49 | 2.89 | 0.66 | 7.99 | 3.76 | 1.74 |
| Example 6 | 7.97 | 3.17 | 0.74 | 9.43 | 3.21 | 1.38 |

As can be seen from Table 2, the amounts of Brönsted acid and Lewis acid at the temperatures of 150°C and 300°C are increased after the modification of molecular sieves, indicating that the modified molecular sieve has better low-temperature reaction activity due to its enhanced acidity at low temperature.

### Test Example 2

The crush strength of the oil modification catalyst was measured using a universal automatic strength tester. The universal automatic strength tester had an instrument range of 0-500N and a precision of 0.1N. During a testing process, a single sample was placed between two rigid platforms, wherein one platform kept stationary and the other platform moved axially downward at a very low speed. The crush strength was determined as the maximum load measured before the particles were crushed. 50 regular particles were selected from each sample and subjected to a strength test, and an average value thereof was taken as a test result. Table 3 showed the crush strength test results of the oil modification catalysts obtained in Examples 1 and 3 after 50 times of crushing. Table 4 illustrated the crushing strength (an average of 50 measurements) of the oil modification catalysts obtained in Examples 1-6 and Comparative Examples 1-3.

**Table 3**

| Test No. | Crush strength (N) | |
|---|---|---|
| | Example 1 | Example 3 |
| 1 | 44.8 | 47.2 |
| 2 | 43.2 | 47.9 |
| 3 | 45.1 | 48.0 |
| 4 | 46.5 | 47.4 |
| 5 | 44.6 | 47.8 |
| 6 | 47.1 | 47.5 |
| 7 | 47.7 | 47.7 |
| 8 | 43.5 | 47.9 |
| 9 | 44.7 | 47.9 |
| 10 | 45.9 | 47.6 |
| 11 | 43.4 | 47.2 |
| 12 | 46.8 | 47.9 |
| 13 | 45.9 | 47.8 |
| 14 | 46.2 | 47.6 |
| 15 | 44.3 | 47.5 |
| 16 | 46.7 | 47.8 |
| 17 | 47.5 | 47.8 |
| 18 | 46.6 | 47.6 |
| 19 | 44.8 | 47.8 |
| 20 | 45.1 | 47.9 |
| 21 | 46.6 | 48 |
| 22 | 47.4 | 47.9 |
| 23 | 46.7 | 47.6 |
| 24 | 45.8 | 47.8 |
| 25 | 47.2 | 47.8 |
| 26 | 44.9 | 47.5 |
| 27 | 47.7 | 47.9 |
| 28 | 46.5 | 47.8 |
| 29 | 47.2 | 47.9 |
| 30 | 46.9 | 47.6 |
| 31 | 46.7 | 47.5 |
| 32 | 43.3 | 47.5 |
| 33 | 45.4 | 47.9 |
| 34 | 47.8 | 48 |
| 35 | 47.1 | 47.8 |
| 36 | 47.3 | 47.9 |
| 37 | 45.5 | 47.8 |
| 38 | 45.7 | 47.9 |
| 39 | 46.3 | 47.9 |
| 40 | 47.8 | 48 |
| 41 | 47.4 | 47.7 |
| 42 | 46.7 | 48 |
| 43 | 46.1 | 47.6 |
| 44 | 47.2 | 47.9 |
| 45 | 43.6 | 47.7 |
| 46 | 46.2 | 47.9 |
| 47 | 44.8 | 47.9 |
| 48 | 45.1 | 48 |
| 49 | 46.9 | 47.7 |
| 50 | 47.8 | 47.8 |

As can be seen from Table 3, the catalysts prepared with the preparation method of catalyst provided by the present disclosure have desirable stability of crushing strength, thus the catalysts can be applied to the fixed bed reactor or the moving bed reactor.

### Test Example 3

The specific surface area, pore size, and pore volume of the modified catalysts obtained in Examples 1-6 and Comparative Examples 1-4 were characterized by using BET. During testing, 10g of a sample to be tested was weighed, and vacuumized at 300°C for 4.0 h, the N₂ adsorption-desorption isotherm curve and the pore size distribution of the catalysts were tested by using the Tri Star II 3020 model automatic analyzer (manufactured by Mike Instrument Company, USA). The specific surface area and the pore size distribution of the sample were calculated by the Brunauer-Emmett-Teller (BET) equation and the BJH method, respectively, the test results were shown in Table 4.

**Table 4**

| | Crush Strength (N) | Specific surface area (m²/g) | Pore volume (cm³/g) | Average pore size (nm) |
|---|---|---|---|---|
| Example 1 | 46.3 | 132.4 | 0.34 | 14.3 |
| Example 2 | 47.1 | 126.8 | 0.35 | 13.5 |
| Example 3 | 46.0 | 119.5 | 0.33 | 12.1 |
| Example 4 | 47.8 | 138.6 | 0.38 | 16.7 |
| Example 5 | 45.8 | 122.9 | 0.33 | 18.8 |
| Example 6 | 46.6 | 130.2 | 0.36 | 14.6 |
| Comparativ e Example 1 | 18.3 | 107.4 | 0.31 | 11.3 |
| Comparativ e Example 2 | 22.7 | 112.7 | 0.32 | 10.6 |
| Comparativ e Example 3 | 38.2 | 126.1 | 0.32 | 18.2 |
| Comparativ e Example 4 | 46.3 | 83.7 | 0.26 | 8.6 |

### Example of the oil modification method

The reducing gas in the reduction process was hydrogen gas having a volume purity of more than or equal to 99% or reformed hydrogen gas.
Oil A: the desalted and dehydrated crude oil of the North China oilfield with a sulfur content of 3.1wt%, the API (American Petroleum Institute) degree of 24, the kinematic viscosity of 56 mm²/s at 50°C, and the total metal content of 111 pg/g;
Oil B: the catalytic raw material (a mixture of vacuum residue and wax oil in a volume ratio of 3: 7) from the Lanzhou Petrochemical Company, it had a sulfur content of 0.6wt%, an API degree of 18, a kinematic viscosity of 121mm²/s at 100°C, and a total metal content of 56µg/g;
Oil C: the vacuum residue from the Sichuan Petrochemical Company, had a sulfur content of 1.7wt%, an API degree of 16, a kinematic viscosity of 614 mm²/s at 100°C, and a total metal content of 172µg/g;
Raw material D: the catalytic slurry oil from the Lanzhou Petrochemical Company, had a sulfur content of 1.1 wt%, an API degree of 20, a kinematic viscosity of 42mm²/s at 100°C, and a total metal content of 154µg/g;
Raw material E: the wax oil from the Sichuan Petrochemical Company, had a sulfur content of 0.56wt%, an API degree of 28, a kinematic viscosity of 8.5mm²/s at 100°C;
Raw material F: the catalytic diesel oil from the Yumen Petrochemical Company, had a sulfur content of 0.86wt%, an API degree of 26, akinematic viscosity of 4mm²/s at 40°C.

Wherein the oil A, oil B, oil C, and raw material D were heavy oil, and the raw materials E and F were medium oil.

Determination of the sulfur content: the total sulfur content in a liquid sample was measured through an ultraviolet fluorescence/chemiluminescence method by adopting the total sulfur and nitrogen analyzer manufactured by PhotonLAB Incorporation of the United States of America (USA) under the conditions that the temperature was 1,000°C, the argon gas pressure was 30psi, the oxygen gas pressure was 10psi, and the reference standard was SH/T 0689-2000 of China.

Determination of kinematic viscosity: refer to the National Standard GB/T 265-1988 of China, namely "Petroleum products - Determination of kinematic viscosity and calculation of dynamic viscosity", each sample is repeated twice to take the average value.

Determination of the metal content: the metal content in the present disclosure refers to the content of sodium, calcium, iron, nickel, vanadium, copper, and plumbum. Among them, the content of sodium elements in the oil product was measured by using the ContrAA 700 type atomic absorption spectrometer manufactured by the German Analytik Jena Gmbh. The content of trace metal elements (calcium, iron, nickel, vanadium, copper, and plumbum) in the oil product was measured by adopting Inductively Coupled Plasma Atomic Emission Spectrometry (ICP-AES).

API degree was a measurement of the density of oil and oil product by measuring the relative density of the oil product at 15.6°C (60°F), and the API degree of the oil/oil product was calculated according to the formula: API = (141.5/relative density) -131.5.

The preferred embodiment of the first oil modification method.

### Example A

The oil modification catalysts obtained in Examples 1-6 and Comparative Examples 1-4 were evaluated using a fixed bed reactor: 400g of oil modification catalyst was filled in a fixed bed reactor, it was initially reduced, and then contacted with an oil product and hydrogen gas to carry out desulfurization reaction, such that the modified oil product was obtained. The total sulfur content (the desulfurization rate was calculated), viscosity, API degree, and metal content of the oil raw material and the modified oil product obtained after the desulfurization process were measured, and the reaction conditions and test results were shown in Table 5.

**Table 5**

| | Exam ple 1 | Exam ple 2 | Exam ple 3 | Exam ple 4 | Exam ple 5 | Exam ple 6 | Com parati ve Exam ple 1 | Com parati ve Exam ple 2 | Com parati ve Exam ple 3 | Com parati ve Exam ple 4 |
|---|---|---|---|---|---|---|---|---|---|---|
| Reducing pressure /MPa | Atmo spher ic press ure | 0.75 | 1 | 1.25 | 1.5 | 3 | 1 | 1 | 1 | 1 |
| Reducing temperature /°C | 300 | 350 | 400 | 400 | 350 | 500 | 400 | 400 | 400 | 400 |
| Reduction time /h | 6 | 4 | 3 | 4 | 3 | 6 | 3 | 3 | 3 | 3 |
| Volume hourly space velocity of hydrogen gas /h⁻¹ | 4000 | 2000 | 2500 | 3000 | 2500 | 500 | 2500 | 2500 | 2500 | 2500 |
| Reducing gas | Hydr ogen gas | Hydr ogen gas | Hydr ogen gas | Hydr ogen gas | Hydr ogen gas | Refor med hydro gen gas | Hydr ogen gas | Hydr ogen gas | Hydr ogen gas | Hydr ogen gas |
| Oil products | A | B | A | C | B | C | A | A | A | A |
| Reaction temperature /°C | 380 | 450 | 420 | 400 | 410 | 440 | 420 | 420 | 420 | 420 |
| Reaction pressure /MPa | 6 | 3 | 5 | 4 | 7 | 4.5 | 5 | 5 | 5 | 5 |
| Volume hourly space velocity of hydrogen gas /h⁻¹ | 0.4 | 0.6 | 0.5 | 0.4 | 0.5 | 0.6 | 0.5 | 0.5 | 0.5 | 0.5 |
| Hydrogen/oil ratio | 400 | 250 | 300 | 350 | 200 | 400 | 300 | 300 | 300 | 300 |
| Desulfurizati on rate/% | 94 | 94 | 96 | 86 | 92 | 88 | 68 | 71 | 66 | 41 |
| Demetallizati on rate/% | 95 | 89 | 98 | 82 | 86 | 85 | 54 | 43 | 48 | 64 |
| Viscosity of modification oil/(mm²/s) | 10.9 | 23.8 | 5.3 | 150 | 23.6 | 122 | 52.8 | 46.4 | 50.6 | 9.7 |
| Product API degree | 32 | 30 | 36 | 22 | 26 | 26 | 26 | 28 | 29 | 33 |

| | | | | | | | | | | |
|---|---|---|---|---|---|---|---|---|---|---|
| Note: the temperature corresponding to the viscosity of modification oil in Table 5 is the same as the temperature of the kinematic viscosity of the raw material oil. | | | | | | | | | | |

The Examples and Comparative Examples show that the oil modification catalyst provided by the present disclosure has a desulfurization rate of more than 85% and a demetallization rate of more than 80%, the catalyst integrates efficient desulfurization, efficient demetallization, and efficient viscosity reduction, it can significantly reduce the density and viscosity of the product, improve the API degree, the desulfurization rate, and the demetallization rate of the product.

The preferred embodiment of the second oil modification method (an oil adsorptive desulfurization modification method).

The first-stage regenerated gas and the second-stage regenerated gas in the Examples and Comparative Examples were mixed gas of air and nitrogen gas, respectively. The mass fraction of the acetic acid was more than or equal to 98%.

### Example B1

(1) The fresh catalyst prepared in Example 1 contacted with hydrogen gas and then reduced in a restorer to obtain an active catalyst; wherein the reduction pressure was normal pressure, the reduction temperature was 300°C, the reduction time was 6 hours, and the hourly space velocity of hydrogen gas was 4000h⁻¹;
(2) The active catalyst, the oil A, and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 4MPa, the reaction temperature was 410°C, the hourly space velocity of the oil A by mass was 0.25h⁻¹, and the hydrogen/oil ratio was 400: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), and the extracted modified product was output as a finished product;
(4) The reacted catalyst was isolated by a locking hopper and then entered an oil washer, and the reacted catalyst was washed with a gasoline fraction; wherein the washing pressure was 4MPa, the washing temperature was 400°C, and the mass ratio of the oil washing liquid to the reacted catalyst was 1.5: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 0.1MPa, the first-stage regeneration temperature was 400°C, the hourly space velocity of the first-stage regenerated gas was 2000 h⁻¹, and the oxygen content in the first-stage regenerated gas was 2.1 v%;
(5) The first-stage regenerant was divided into part A and part B, wherein part A of said first-stage regenerant accounted for 20% of the total mass of said first-stage regenerant, and part A of said first-stage regenerant entered a rejuvenator and contacted with acetic acid for performing a reactivation treatment to obtain a reactivation product; wherein the reactivation reaction pressure was 0.1MPa, the reactivation reaction temperature was 100°C, and the mass ratio of the part A of said first-stage regenerant to the reactivation liquid was 1.2: 1;
   The reactivation product and part B of said first-stage regenerant were isolated by a locking hopper and then entered a second-stage regenerator for performing a second-stage regeneration to obtain a regenerated catalyst, wherein the second-stage regeneration pressure was 0.1MPa, wherein the second-stage regeneration temperature was 480°C, the hourly space velocity of the second-stage regenerated gas was 2000 h⁻¹, and the oxygen content in the second-stage regenerated gas was 12.6 v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 3% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.73wt%, the yield of the C3 ingredient was 0.26wt%, the yield of the modified product was 94.81wt%, and the yield of coke was 1.32 wt%; the recovery rate of sulfur in the flue gas desulfurization system was 2.88%;
The properties of the modified product were as follows: the sulfur content was 0.22wt%, the API degree was 34, the viscosity (50°C) was 11 mm²/s, and the metal content was 16µg/g.

### Example B2

(1) The fresh catalyst prepared in Example 2 contacted with hydrogen gas and then reduced in a restorer to obtain an active catalyst; wherein the reduction pressure was 0.75MPa, the reduction temperature was 350°C, the reduction time was 4 hours, and the hourly space velocity of hydrogen gas was 2000h⁻¹;
(2) The active catalyst, the oil B, and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 6MPa, the reaction temperature was 430°C, the hourly space velocity of the oil B by mass was 0.5h⁻¹, and the hydrogen/oil ratio was 300: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), the extracted modified product was divided into part a and part b, wherein said part a was recycled to the moving bed reactor, said part b was output as the finished product, wherein said part a accounted for 20% of the total mass of the modified product, said part b accounted for 80% of the total mass of the modified product.
(4) The reacted catalyst was isolated by a locking hopper and then entered an oil washer, and the reacted catalyst was washed with a gasoline fraction; wherein the washing pressure was 6MPa, the washing temperature was 410°C, and the mass ratio of the oil washing liquid to the reacted catalyst was 1.5: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 0.5MPa, the first-stage regeneration temperature was 420°C, the hourly space velocity of the first-stage regenerated gas was 1000 h⁻¹, and the oxygen content in the first-stage regenerated gas was 1.26 v%;
(5) The first-stage regenerant was divided into part A and part B, wherein part A of said first-stage regenerant accounted for 10% of the total mass of said first-stage regenerant, and part A of said first-stage regenerant entered a rejuvenator and contacted with acetic acid for performing a reactivation treatment to obtain a reactivation product; wherein the reactivation reaction pressure was 0.5MPa, the reactivation reaction temperature was 130°C, and the mass ratio of the part A of said first-stage regenerant to the reactivation liquid was 1.2: 1;
   The reactivation product and the part B of said first-stage regenerant were isolated by a locking hopper and then entered a second-stage regenerator for performing a second-stage regeneration to obtain a regenerated catalyst, wherein the second-stage regeneration pressure was 0.5MPa, wherein the second-stage regeneration temperature was 510°C, the hourly space velocity of the second-stage regenerated gas was 1000 h⁻¹, and the oxygen content in the second-stage regenerated gas was 4.2v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 4% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.49wt%, the yield of the C3 ingredient was 0.17wt%, the yield of the modified product was 97.97wt%, and the yield of coke was 0.82wt%; the recovery rate of sulfur in the flue gas desulfurization system was 0.55%;
The properties of the modified product were as follows: the sulfur content was 0.054wt%, the API degree was 30, the viscosity (100°C) was 22 mm²/s, and the metal content was 8µg/g.

### Example B3

(1) The fresh catalyst prepared in Example 3 contacted with hydrogen gas and then reduced in a restorer to obtain an active catalyst; wherein the reduction pressure was 1.0MPa, the reduction temperature was 400°C, the reduction time was 3 hours, and the hourly space velocity of hydrogen gas was 2500h⁻¹;
(2) The active catalyst, the oil C, and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 8MPa, the reaction temperature was 450°C, the hourly space velocity of the oil C by mass was 0.5h⁻¹, and the hydrogen/oil ratio was 500: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), the extracted modified product was divided into part a and part b, wherein said part a was recycled to the moving bed reactor, said part b was output as the finished product, wherein said part a accounted for 50% of the total mass of the modified product, said part b accounted for 50% of the total mass of the modified product.
(4) The reacted catalyst was isolated by a locking hopper and then entered an oil washer, and the reacted catalyst was washed with a gasoline fraction; wherein the washing pressure was 8MPa, the washing temperature was 430°C, and the mass ratio of the oil washing liquid to the reacted catalyst was 1.2: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 1.0MPa, the first-stage regeneration temperature was 440°C, the hourly space velocity of the first-stage regenerated gas was 3000 h⁻¹, and the oxygen content in the first-stage regenerated gas was 4.2 v%;
(5) The first-stage regenerant was divided into part A and part B, wherein part A of said first-stage regenerant accounted for 30% of the total mass of said first-stage regenerant, and part A of said first-stage regenerant entered a rejuvenator and contacted with acetic acid for performing a reactivation treatment to obtain a reactivation product; wherein the reactivation reaction pressure was 1.0MPa, the reactivation reaction temperature was 160°C, and the mass ratio of the part A of said first-stage regenerant to the reactivation liquid was 1.2: 1;
   The reactivation product and part B of said first-stage regenerant entered a second-stage regenerator for performing a second-stage regeneration to obtain a regenerated catalyst, wherein the second-stage regeneration pressure was 1.0MPa, wherein the second-stage regeneration temperature was 550°C, the hourly space velocity of the second-stage regenerated gas was 3000 h⁻¹, and the oxygen content in the second-stage regenerated gas was 12.6v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 5% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.84wt%, the yield of the C3 ingredient was 0.61wt%, the yield of the modified product was 95.60wt%, and the yield of coke was 1.56wt%; the recovery rate of sulfur in the flue gas desulfurization system was 1.39%;
The properties of the modified product were as follows: the sulfur content was 0.31wt%, the API degree was 26, the viscosity (100°C) was 121 mm²/s, and the metal content was 34µg/g.

### Example B4

(1) The fresh catalyst prepared in Example 4 contacted with hydrogen gas and then reduced in a restorer to obtain an active catalyst; wherein the reduction pressure was 1.25MPa, the reduction temperature was 400°C, the reduction time was 4 hours, and the hourly space velocity of hydrogen gas was 3000h⁻¹;
(2) The active catalyst, the oil D and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 4MPa, the reaction temperature was 420°C, the hourly space velocity of the oil D by mass was 1.0h⁻¹, and the hydrogen/oil ratio was 400: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), the extracted modified product was divided into part a and part b, wherein said part a was recycled to the moving bed reactor, said part b was output as the finished product, wherein said part a accounted for 30% of the total mass of the modified product, said part b accounted for 70% of the total mass of the modified product.
(4) The reacted catalyst was isolated by a locking hopper and then entered an oil washer, and the reacted catalyst was washed with a gasoline fraction; wherein the washing pressure was 4MPa, the washing temperature was 390°C, and the mass ratio of the oil washing liquid to the reacted catalyst was 1.2: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 1.0MPa, the first-stage regeneration temperature was 410°C, the hourly space velocity of the first-stage regenerated gas was 1500 h⁻¹, and the oxygen content in the first-stage regenerated gas was 1.56 v%;
(5) The first-stage regenerant was divided into part A and part B, wherein part A of said first-stage regenerant accounted for 10% of the total mass of said first-stage regenerant, and part A of said first-stage regenerant entered a rejuvenator and contacted with acetic acid for performing a reactivation treatment to obtain a reactivation product; wherein the reactivation reaction pressure was 1.0MPa, the reactivation reaction temperature was 100°C, and the mass ratio of the part A of said first-stage regenerant to the reactivation liquid was 1.2: 1;
   The reactivation product and part B of said first-stage regenerant entered a second-stage regenerator for performing a second-stage regeneration to obtain a regenerated catalyst, wherein the second-stage regeneration pressure was 1.0MPa, wherein the second-stage regeneration temperature was 530°C, the hourly space velocity of the second-stage regenerated gas was 1500 h⁻¹, and the oxygen content in the second-stage regenerated gas was 10.2v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 2% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.69wt%, the yield of the C3 ingredient was 0.38wt%, the yield of the modified product was 97.17wt%, and the yield of coke was 0.82wt%; the recovery rate of sulfur in the flue gas desulfurization system was 0.94%;
The properties of the modified product were as follows: the sulfur content was 0.16wt%, the API degree was 28, the viscosity (100°C) was 6 mm²/s, and the metal content was 23µg/g.

### Example B5

(1) The fresh catalyst prepared in Example 5 contacted with hydrogen gas and then reduced in a restorer to obtain an active catalyst; wherein the reduction pressure was 1.5MPa, the reduction temperature was 350°C, the reduction time was 3 hours, and the hourly space velocity of hydrogen gas was 2500h⁻¹;
(2) The active catalyst, the oil E, and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 2MPa, the reaction temperature was 400°C, the hourly space velocity of the oil E by mass was 1.5h⁻¹, and the hydrogen/oil ratio was 300: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), the extracted modified product was divided into part a and part b, wherein said part a was recycled to the moving bed reactor, said part b was output as the finished product, wherein said part a accounted for 10% of the total mass of the modified product, said part b accounted for 90% of the total mass of the modified product.
(4) The reacted catalyst was isolated by a locking hopper and then entered an oil washer, and the reacted catalyst was washed with a gasoline fraction; wherein the washing pressure was 2MPa, the washing temperature was 370°C, and the mass ratio of the oil washing liquid to the reacted catalyst was 1.2: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 0.5MPa, the first-stage regeneration temperature was 380°C, the hourly space velocity of the first-stage regenerated gas was 2500 h⁻¹, and the oxygen content in the first-stage regenerated gas was 2.38 v%;
(5) The first-stage regenerant entered a second-stage regenerator for performing a second-stage regeneration to obtain a regenerated catalyst, wherein the second-stage regeneration pressure was 0.5MPa, wherein the second-stage regeneration temperature was 500°C, the hourly space velocity of the second-stage regenerated gas was 2500 h⁻¹, and the oxygen content in the second-stage regenerated gas was 6.8v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 1% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.53wt%, the yield of the C3 ingredient was 0.45wt%, the yield of the modified product was 97.81wt%, and the yield of coke was 0.69wt%; the recovery rate of sulfur in the flue gas desulfurization system was 0.52%;
The properties of the modified product were as follows: the sulfur content was 0.04wt%, the API degree was 34, and the viscosity (100°C) was 1.3 mm²/s.

### Example B6

(1) The fresh catalyst prepared in Example 6 contacted with hydrogen gas and then reduced in a restorer to obtain an active catalyst; wherein the reduction pressure was 3MPa, the reduction temperature was 500°C, the reduction time was 6 hours, and the hourly space velocity of hydrogen gas was 500h⁻¹;
(2) The active catalyst, the oil F, and the reactive hydrogen gas entered a reactor from the upper end of the moving bed reactor in a forward flow for carrying out an adsorptive desulfurization modification reaction to obtain a modified product and a reacted catalyst; wherein the reaction pressure of the adsorptive desulfurization modification reaction was 1MPa, the reaction temperature was 380°C, the hourly space velocity of the oil F by mass was 2.0h⁻¹, and the hydrogen/oil ratio was 200: 1;
(3) The modified product entered a flash tank and was separated to obtain a modified product, C3 ingredient, and hydrogen-rich tail gas; wherein the extracted hydrogen-rich tail gas was introduced into a hydrogen separation unit for performing the hydrogen gas separation to obtain dry gas and recycled hydrogen gas, the obtained recycled hydrogen gas was pressurized and circularly added into the reactive hydrogen gas in step (2), the extracted modified product was divided into part a and part b, wherein said part a was recycled to the moving bed reactor, said part b was output as the finished product, wherein said part a accounted for 10% of the total mass of the modified product, said part b accounted for 90% of the total mass of the modified product.
(4) The reacted catalyst was isolated by a locking hopper and then entered an oil washer, and the reacted catalyst was washed with a gasoline fraction; wherein the washing pressure was 1MPa, the washing temperature was 350°C, and the mass ratio of the oil washing liquid to the reacted catalyst was 1.2: 1;
   The waste oil washing liquid obtained following the washing process entered a fractionating tower, the oil washing liquid extracted from the top of said fractionating tower was recycled to the oil washer, and the components extracted from the bottom of said fractionating tower were mixed with the modified product in step (2), and the mixture was output as a finished product;
   The reacted catalyst obtained following the washing process entered a locking hopper through a lifter, it was isolated by the locking hopper and then entered a first-stage regenerator for performing a first-stage regeneration to obtain a first-stage regenerant, wherein the first-stage regeneration pressure was 0.1MPa, the first-stage regeneration temperature was 360°C, the hourly space velocity of the first-stage regenerated gas was 2000 h⁻¹, and the oxygen content in the first-stage regenerated gas was 3.64 v%;
(5) The first-stage regenerant entered a second-stage regenerator for performing a second-stage regeneration to obtain a regenerated catalyst, wherein the second-stage regeneration pressure was 0.1MPa, wherein the second-stage regeneration temperature was 440°C, the hourly space velocity of the second-stage regenerated gas was 2000 h⁻¹, and the oxygen content in the second-stage regenerated gas was 8.4v%;
   Wherein the regenerated flue gas discharged from the first-stage regenerator and the second-stage regenerator was desulfurized by the flow gas desulfurization system and then discharged outside;
(6) The regenerated catalyst entered a separator to separate a recycled catalyst and a waste catalyst, wherein the waste catalyst accounted for 1% of the total mass of the regenerated catalyst; the separated recycle catalyst passed through a lifter and entered a locking hopper, and then isolated by a locking hopper and entered a restore, in the meanwhile, the fresh catalyst with the same mass as the separated waste catalyst was supplemented into the restore, both the recycle catalyst and the supplemented fresh catalyst were in contact with hydrogen gas in the restore and subjected to reduction, the reduced active catalyst was isolated by the locking hopper and subsequently returned to the moving bed reactor for recycling.

As can be seen from an analysis of the reaction:
The yield of the dry gas was 0.36wt%, the yield of the C3 ingredient was 0.18wt%, the yield of the modified product was 98.25wt%, and the yield of coke was 0.37wt%; the recovery rate of sulfur in the flue gas desulfurization system was 0.84%;
The properties of the modified product were as follows: the sulfur content was 0.02wt%, the API degree was 30, and the viscosity (40°C) was 3.32 mm²/s.

### Example B7

The catalyst was prepared according to the method in Example B1, except that the reactivation treatment in step (5) of oil adsorptive desulfurization modification was omitted, the first-stage regenerant was directly subjected to the second-stage regeneration.

As can be seen from an analysis of the reaction:
The yield of the dry gas was 0.67wt%, the yield of the C3 ingredient was 0.19wt%, the yield of the modified product was 95.76wt%, and the yield of coke was 1.36wt%; the recovery rate of sulfur in the flue gas desulfurization system was 2.02%;
The properties of the modified product were as follows: the sulfur content was 1.08wt%, the API degree was 30, the viscosity (50°C) was 20 mm²/s, and the metal content was 49µg/g.

### Comparative Example B1

The catalyst was prepared according to the method in Example B1, except that step (5) in oil adsorptive desulfurization modification was omitted (i.e., the reactivation and the second-stage regeneration were omitted), the first-stage regenerant in step (4) was used as the regenerated catalyst and entered the separator in step (6).

As can be seen from an analysis of the reaction:
The yield of the dry gas was 0.64wt%, the yield of the C3 ingredient was 0.16wt%, the yield of the modified product was 97.34wt%, and the yield of coke was 1.44wt%; the recovery rate of sulfur in the flue gas desulfurization system was 0.42%;
The properties of the modified product were as follows: the sulfur content was 2.46wt%, the API degree was 26, the viscosity (50°C) was 49 mm²/s, and the metal content was 51 pg/g.

As can be seen from the above examples, the oil adsorptive desulfurization modification method provided by the present disclosure through the combination of the catalyst and the process can achieve continuous production, significantly improve the effects of desulfurization and viscosity reduction, reduce metal content in the modified product, increase API degree of the modified product, improve the utilization rate of hydrogen gas, reduce hydrogen consumption, thus the method is suitable for industrial promotion.

The comparison result between Example B1 and Comparative Example B1 indicates that the modification method with only the first-stage regeneration exhibits a poor desulfurization effect. It is discovered from the elemental analysis of the regenerated catalyst that the sulfur oxide content in the regenerated catalyst is as high as 16%, indicating that the catalyst is not efficiently regenerated, resulting in a decreased desulfurization activity of the catalyst.

The above content describes in detail the preferred embodiments of the present disclosure, but the present disclosure is not limited thereto. A variety of simple modifications can be made in regard to the technical solutions of the present disclosure within the scope of the technical concept of the present disclosure, including a combination of individual technical features in any other suitable manner, such simple modifications and combinations thereof shall also be regarded as the content disclosed by the present disclosure, each of them falls into the protection scope of the present disclosure.

## Claims

1. An oil modification catalyst comprising 65-85wt% of a carrier, 8-15wt% of a primary active ingredient, 2-5wt% of a secondary active ingredient, and 5-15wt% of a binder, based on the total amount of the catalyst;
wherein the carrier comprises 65-85wt% of zinc oxide, 8-22wt% of alumina, 0-5wt% of titanium oxide, 0-5wt% of zirconia, and 4-10wt% of modified molecular sieve, based on the total amount of the carrier; wherein the content of titanium oxide and the content of zirconium are not zero at the same time;
the modified molecular sieve comprises a molecular sieve and a modification element; the molecular sieve is selected from a USY molecular sieve and/or Beta molecular sieve; and the modification element is selected from lanthanum and/or palladium;
wherein the primary active ingredient is selected from oxides of nickel and/or copper, the secondary active ingredient is one or more selected from oxides of potassium, cobalt, molybdenum, and iron; and the binder is selected from alumina and/or silicon oxide.

2. The catalyst according to claim 1, wherein the catalyst comprises 70-80wt% of the carrier, 10-13wt% of the primary active ingredient, 3-4wt% of the secondary active ingredient, and 7-13wt% of binder, based on the total amount of the catalyst.

3. The catalyst according to claim 1 or 2, wherein the carrier comprises 70-80wt% of zinc oxide, 12-18wt% of alumina, 3-5wt% of titanium oxide or zirconia, and 5-7wt% of modified molecular sieve, based on the total amount of the carrier.

4. The catalyst according to claim 1 or 2, wherein the content of said modification element calculated in terms of oxide is within the range of 0.1-5 wt%, preferably 1-3wt%, based on the total amount of the modified molecular sieve;
preferably, the modification element is lanthanum and palladium; wherein the mass ratio of lanthanum to palladium calculated in terms of oxide is 1:(0.05-0.5), preferably 1:(0.1-0.3).

5. The catalyst according to any one of claims 1-4, wherein the catalyst has a crush strength within the range of 40-50N, preferably 43-48N; a specific surface area within the range of 100-160 m²/g, preferably 115-145m²/g; a pore volume within the range of 0.3-0.4cm³/g, preferably 0.33-0.38cm³/g, and an average pore size within the range of 5-25nm, preferably 10-20nm.

6. A method for prepararing the oil modification catalyst comprising the following steps:
(1) loading a modification element on a molecular sieve to obtain the modified molecular sieve powder; wherein the modification element is selected from lanthanum and/or palladium, and the molecular sieve is selected from a USY molecular sieve and/or Beta molecular sieve;
(2) subjecting a carrier precursor and a pore former to a resonant mixing to obtain a mixture I; wherein the carrier precursor comprises a zinc oxide powder, pseudo-boehmite, an optional titanium oxide powder, an optional zirconia powder, and the modified molecular sieve powder; wherein at least one of the titanium oxide powder and the zirconia powder is contained;
(3) adding a primary active ingredient precursor to mixture I to obtain mixture II; wherein the primary active ingredient precursor is a soluble compound containing nickel and/or copper;
(4) blending the binder precursor and mixture II and then performing a granulation molding and a first roasting to obtain solid particles;
(5) impregnating a secondary active ingredient precursor on the solid particles and performing a second roasting to prepare the oil modification catalyst; wherein the secondary active ingredient precursor is one or more selected from the soluble compounds of potassium, cobalt, molybdenum, and iron.

7. The method according to claim 6, wherein, in step (1), the loading comprises initially immersing the molecular sieve in a modification element-containing solution, followed by drying and roasting to obtain a modified molecular sieve powder;
preferably, the modification element-containing solution is a solution of a soluble compound containing lanthanum and/or a soluble compound containing palladium;
preferably, the molecular sieve has a silica/alumina ratio within the range of 10-100, more preferably within the range of 30-60;
preferably, the molecular sieve is selected from a USY molecular sieve or Beta molecular sieve;
preferably, the operating conditions of said immersing comprise a treatment at 30-85°C for 2-10h, more preferably a treatment at 50-70°C for 4-6h;
preferably, the feeding of the molecular sieve and the modification element-containing solution causes that the content of said modification element calculated in terms of oxide is within the range of 0.1-5wt%, preferably 1-3wt%,based on the total amount of the modified molecular sieve powder;
preferably, the modification element is lanthanum and palladium; wherein the mass ratio of lanthanum to palladium calculated in terms of oxide is 1:(0.05-0.5), preferably 1:(0.1-0.3).

8. The method according to claim 6 or 7, wherein, in step (2), the zinc oxide powder is nanometer zinc oxide with large pore size, the zinc oxide powder has a pore size within the range of 10-50nm, preferably 20-40nm;
preferably, the pseudo-boehmite has a pore volume within the range of 0.2-1mL/g, more preferably within the range of 0.4-0.8mL/g, a specific surface area within the range of 150-300m²/g, more preferably within the range of 180-260m²/g, and a peptization index greater than or equal to 92%, more preferably greater than or equal to 95%;
preferably, the pore former is one or more selected from the group consisting of methylcellulose, carboxymethylcellulose, and sesbania cannabia powder; preferably, the feeding of said carrier precursor causes that the prepared carrier of the modification catalyst comprises 65-85wt% of zinc oxide, 8-22wt% of alumina, 0-5wt% of titanium oxide or zirconia, and 4-10wt% of modified molecular sieve, based on the total mass of the carrier; wherein the content of titanium oxide and the content of zirconium are not zero at the same time;
preferably, the mass ratio of the pore former to zinc oxide powder in the carrier precursor is preferably 1:(10-45), more preferably 1:(20-35).

9. The method according to any one of claims 6-8, wherein, in step (3), the nickel-containing soluble compound is one or more selected from the group consisting of nickel nitrate, nickel acetate, and nickel chloride; and the copper-containing soluble compound is one or more selected from the group consisting of copper nitrate, copper sulfate, and copper chloride; preferably, the mass ratio of the primary active ingredient precursor to the carrier precursor in the mixture I is (8-15):(65-85), based on the mass of the metal oxides in the primary active ingredient precursor.

10. The method according to any one of claims 6-9, wherein, in step (4), the binder precursor is selected from an aluminum sol or a silicon sol, preferably an aluminum sol;
preferably, the mass ratio of the binder precursor to the carrier precursor in mixture II is (5-15):(65-85), preferably (7-13):(70-80), based on the mass of the oxide corresponding to the aluminum or silicon element in the binder precursor;
preferably, the granules obtained after said granulation molding have an average particle size within the range of 0.5-10mm, more preferably within the range of 0.5-5mm;
preferably, the operating conditions of the first roasting comprise a first roasting temperature within the range of 400-700°C and a first roasting time within the range of 1-10h, further preferably, a first roasting temperature within the range of 400-550°C and a first roasting time within the range of 3-10h.

11. The method according to any one of claims 6-10, wherein, in step (5), the secondary active ingredient precursor is selected from a soluble compound of cobalt and/or molybdenum;
preferably, the mass ratio of the secondary active ingredient precursor to the carrier precursor in the solid particles is (2-5):(65-85), based on the mass of the metal oxide in the secondary active ingredient precursor;
preferably, the operating conditions of impregnating comprise an impregnation temperature within the range of 20-90°C and an impregnation time within the range of 1-24h, further preferably an impregnation temperature within the range of 30-50°C and an impregnation time within the range of 8-24h;
preferably, the operating conditions of second roasting comprise a second roasting temperature within the range of 400-700°C and a second roasting time within the range of 1-10h, further preferably, a second roasting temperature within the range of 400-550°C and a second roasting time within the range of 4-6h.

12. An oil modification method comprising reducing the catalyst according to any one of claims 1-5, and subsequently contacting the catalyst with an oil product and hydrogen gas to carry out a modification reaction to obtain a modified oil product.

13. The method according to claim 12, wherein the operating conditions of reducing comprise: a reducing temperature within the range of 250-550°C, preferably within the range of 300-400°C; a reducing pressure within the range from atmospheric pressure to 3.5MPa, preferably within the range from atmospheric pressure to 1.25MPa; a reduction treatment time within the range of 2-8h, preferably within the range of 3-6h; an hourly space velocity of hydrogen gas within the range of 500-4,500 h⁻¹, preferably within the range of 2,000-4,000 h⁻¹.

14. The method according to claim 12 or 13, wherein the oil product comprises medium oil and heavy oil;
preferably, the medium oil has a distillation range within the range of 250-450°C, and the heavy oil has a distillation range larger than 450°C;
preferably, the medium oil has a sulfur content within the range of 0.3-1wt%, and the heavy oil has a sulfur content within the range of 0.5-3.5wt%;
preferably, the oil product is selected from the group consisting of straightrun diesel, catalytic diesel, catalytic slurry oil, coking raw material, coker diesel, coker wax oil, atmospheric residuum, vacuum residuum, wax oil, heavy crude oil, and a mixture thereof.

15. The method according to claim 12, wherein the operating conditions of modification reaction comprise a reaction temperature within the range of 300-450°C, preferably within the range of 350-450°C; a reaction pressure within the range of 1-10MPa, preferably within the range of 3-7MPa; an hourly space velocity of hydrogen gas within the range of 0.2-0.8 h⁻¹, preferably within the range of 0.4-0.6 h⁻¹; and a hydrogen/oil ratio within the range of 100-500, preferably within the range of 200-400.

16. An oil adsorptive desulfurization modification method comprising the following steps:
(1) reducing a material containing a fresh catalyst in the presence of hydrogen gas to obtain an active catalyst;
(2) contacting an oil product and reactive hydrogen gas with the active catalyst in a moving bed reactor to carry out an adsorptive desulfurization modification reaction to obtain a modification outcome and a post-reaction catalyst;
(3) separating the modification outcome to obtain a modified product;
(4) subjecting the post-reaction catalyst to a first-stage regeneration to obtain a first-stage regenerant;
(5) subjecting the first-stage regenerant to a second-stage regeneration to obtain a regenerated catalyst;
(6) returning the regenerated catalyst to the materials in step (1) for recycling.

17. The method according to claim 16, in step(1), wherein said fresh catalyst is the catalyst according to any one of claims 1-5;
preferably, the operating conditions of reducing comprise: a reducing temperature within the range of 250-550°C, preferably within the range of 300-400°C; a reducing pressure within the range from atmospheric pressure to 3.5MPa, preferably within the range from atmospheric pressure to 1.25MPa; a reducing time within the range of 2-8h, preferably within the range of 3-6h; a hourly space velocity of hydrogen gas within the range of 500-4,500 h⁻¹, preferably within the range of 2,000-4,000 h⁻¹.

18. The method according to claim 16 or 17, wherein in step (2), the oil product comprises medium oil and heavy oil;
preferably, the medium oil has a distillation range within the range of 250-450°C, and the heavy oil has a distillation range larger than 450°C;
preferably, the medium oil has a sulfur content within the range of 0.3-1wt%, and the heavy oil has a sulfur content within the range of 0.5-3.5wt%;
preferably, the oil product is selected from the group consisting of straightrun diesel, catalytic diesel, catalytic slurry oil, coking raw material, coker diesel, coker wax oil, atmospheric residuum, vacuum residuum, wax oil, heavy crude oil, and a mixture thereof;
preferably, the operating conditions of said adsorptive desulfurization modification comprise a reaction temperature within the range of 300-450°C, more preferably within the range of 350-450°C; a reaction pressure within the range of 1-10MPa, more preferably within the range of 3 - 7MPa; an hourly space velocity of hydrogen gas within the range of 0.2-0.8 h⁻¹, more preferably within the range of 0.4-0.6 h⁻¹; and a hydrogen/oil ratio within the range of 100-500, more preferably within the range of 200-400.

19. The method according to any one of claims 16-18, wherein, in step (3), the separating is flash evaporation to separate the modification outcome to obtain a modified product, a C₃ ingredient, and a hydrogen-rich tail gas;
preferably, the hydrogen-rich tail gas is subjected to hydrogen separation to obtain a dry gas and a recycled hydrogen gas; wherein the recycled hydrogen gas is circularly added into the reactive hydrogen gas in step (2);
preferably, the method further comprises: dividing the modified product into part a and part b, wherein said part a is circularly added into the oil product in step (2), said part b is output as the finished product; said part a accounts for 0-80wt% of the total mass of the modified product.

20. The method according to any one of claims 16-19, wherein the method further comprises: in step (4), before said first-stage regeneration, said post-reaction catalyst is preferably cleaned with an oil washing liquid; wherein the oil washing liquid is one or more selected from the group consisting of gasoline fraction, mono-aromatic hydrocarbon fraction, mixed aromatic hydrocarbon fraction, preferably a gasoline fraction;
preferably, the operating conditions of said cleaning comprise: a mass ratio of the oil washing liquid to the post-reaction catalyst is (1-2): 1, a cleaning pressure within the range of 1-10MPa, a cleaning temperature within the range of 350-430°C;
preferably, the operating conditions for the first-stage regeneration comprise a first-stage regeneration pressure within the range of 0.01-1MPa, preferably within the range of 0.1-0.5MPa; a first-stage regeneration temperature within the range of 320-480°C, preferably within the range of 360-440°C; an hourly space velocity of first-stage regenerated gas within the range of 500-4,000 h⁻¹, preferably within the range of 1,000-3,000 h⁻¹; and an oxygen content of the first-stage regenerated gas within the range of 0.8-5.5v%, preferably within the range of 1.2-4.2v%.

21. The method according to any one of claims 16-20, wherein the method further comprises: in step (5), dividing the one-stage regenerant into part A and part B, contacting part A with a reactivation liquid to perform a reactivation treatment to obtain a reactivated product; and subjecting the reactivated product and the part B to a second-stage regeneration;
preferably, the content of said part A accounts for 0-50% of the total mass of said first-stage regenerant;
preferably, the reactivation liquid is one or more selected from the group consisting of acetic acid, formic acid, citric acid, oxalic acid, and nitric acid, preferably acetic acid;
preferably, the operating conditions of reactivation comprise a mass ratio of part A in the first-stage regenerant to the reactivation liquid is (1-2): 1, a reactivation pressure within the range of 0.1-1MPa, and a reactivation temperature within the range of 60-160°C;
preferably, the operating conditions of second-stage regeneration comprise a second-stage regeneration pressure within the range of 0.01-1MPa, more preferably within the range of 0.1-0.5MPa; a second-stage regeneration temperature within the range of 420-570°C, more preferably within the range of 440-550°C; an hourly space velocity of second-stage regenerated gas within the range of 500-4,500 h⁻¹, more preferably within the range of 1,000-3,000 h⁻¹; and oxygen content of the second-stage regenerated gas within the range of 3-15v%, more preferably within the range of 4.2-12.6v%;
preferably, the second-stage regeneration temperature is higher than the first-stage regeneration temperature, and the oxygen content of the second-stage regenerated gas is higher than the oxygen content of the first-stage regenerated gas.

22. The method according to any one of claims 16-21, wherein, in step (6), the regenerated catalyst is divided into a recycled catalyst and a waste catalyst, the recycled catalyst is returned to the materials in step (1) for recycling, a fresh catalyst with an equivalent amount of the waste catalyst is added at the same time of returning the recycled catalyst to the materials in step (1);
preferably, the waste catalyst accounts for 0.01-5wt% of the total mass of the regenerated catalyst.

23. An oil adsorptive desulfurization modification system comprising a restorer (1), a moving bed reactor (2), a separation tower (3), a first-stage regenerator (4), and a second-stage regenerator (5);
wherein the restorer (1) is connected end-to-end with the moving bed reactor (2), the first-stage regenerator (4), and the second-stage regenerator (5); the separation tower (3) is connected with the moving bed reactor (2).

24. The system according to claim 23, wherein the system further comprises an oil washing device including an oil washer (6) and a fractionating tower (7); wherein the oil washer (6) is arranged between the moving bed reactor (2) and first-stage regenerator (4); the fractionating tower (7) is connected with the oil washer (6) for separating the spent oil washing liquid which comes from the oil washer (6) and returning the separated oil washing liquid to the oil washer (6).

25. The system according to claim 23 or 24, wherein the system further comprises a rejuvenator (8), which is connected in parallel on the pipeline of the first-stage regenerator (4) and the second-stage regenerator (5);
preferably, the system further comprises a separator (9) disposed between the second-stage regenerator (5) and the restorer (1);
preferably, a locking hopper (10) is provided in front of a feed inlet of the restorer (1), the moving bed reactor (2), the first-stage regenerator (4), the second-stage regenerator (5), the oil washer (6), and the rejuvenator (8), respectively;
preferably, a lifter (11) is provided at an outlet of the second-stage regenerator (5) and an outlet of the oil washer (6) respectively, the lifter (11) is used for transporting solid materials.

26. The system according to any one of claims 23-25, wherein the system further comprises a flue gas desulfurization system (12), which is connected with the first-stage regenerator (4) and the second-stage regenerator (5).

27. The system according to any one of claims 23-26, wherein the system further comprises a hydrogen separation unit (13) disposed between the moving bed reactor (2) and the separation tower (3).
